# EUROPEAN PATENT SPECIFICATION

(11) **EP 4 312 599 B1**
(45) Date of publication and mention of the grant of the patent: **16.07.2025**
(21) Application number: 22716405.0
(22) Date of filing: 21.03.2022
(51) Int. Cl.: A23N 17/00, A23K 30/10

(54) **AN APPARATUS FOR STEAMING ANIMAL FODDER**
EINE VORRICHTUNG ZUM DÄMPFEN VON TIERFUTTER
UN DISPOSITIF POUR FUMER DU FOURRAGE

(30) Priority: 23.03.2021 GB 202104027
(43) Date of publication of application: 07.02.2024
(73) Proprietor: Sanderson Steamers Limited, Alresford Hampshire SO24 0HJ (GB)
(72) Inventor: SANDERSON, Rob, Hampshire SO24 0HJ (GB); SANDERSON, Andrew, Hampshire SO24 0HJ (GB); MILLER, Austen, Hampshire RG28 7LN (GB); PHILLIPS, Daniel, Hampshire RG28 7LN (GB)
(74) Representative: Boult Wade Tennant LLP
(86) International application number: PCT/EP2022/057338
(87) International publication number: WO 2022/200266

(56) References cited:
- EP-A1- 0 063 892
- EP-A2- 0 803 203
- WO-A1-2021/044164
- CN-U- 209 058 107
- US-A- 3 345 992
- US-B1- 6 454 996

## Description

### FIELD OF INVENTION

The present invention relates to an apparatus for steaming animal fodder, in particular hay. More particularly, the present invention relates to an apparatus for steaming hay that reduces bacteria, mould spores, fungi and dust particles in the hay.

### BACKGROUND

Hay, and other types of fodder such as straw, silage and haylage, are commonly fed to horses, as well as other livestock, and may be used for growing plants, fruit and vegetables such as mushrooms. However, such fodder may contain many different types of bacteria, mould spores and dust particles that can affect a horse's breathing and cause coughing. The particles are respiratory irritants, and can lead to respiratory diseases such as chronic obstructive pulmonary disease (COPD).

It is well known to soak hay with water to mitigate respiratory issues in horses and other livestock. Soaking the hay causes the particles to stick to the hay, so they are consumed, rather than inhaled. However, soaking reduces the sugar content in the hay and can also result in loss of nutrients. Soaked hay is also significantly heavier due to the increased water content, making it harder to carry. If left for too long, the soaked hay can spoil as bacteria builds up, since soaking does not kill the particles.

Some of these disadvantages may be overcome by using a hay steamer to treat hay bales with steam in order to remove and kill the bacteria, mould spores, fungi and dust particles. Steaming the hay or other silage reduces the risk of causing and/or exasperating allergies and respiratory issues. The advantages of using a steamer over soaking hay include increased removal of the particles, less nutrient loss, more palatable hay, and increased water intake by a horse, improving their hydration. In addition, significantly less water is needed for steaming compared to soaking.

An example of a hay steamer is to be found in patent publication GB 2,454,969. The body of the hay steamer comprises four side walls that rise from a base to form a chamber into which hay bales may be loaded. The top of the steamer comprises a hinged lid that may be opened to allow loading and unloading of hay bales, and closed to form a closed chamber when the hay bales are being steamed. A separate boiler unit heats water to produce steam. The boiler unit is connected to the body of the hay steamer via a hose which, in turn, connects to further hoses and then to lances that extend into the chamber and penetrate any bale loaded in the chamber. In this way, steam generated by the boiler unit travels to and through the body of the hay steamer, and then passes through at least one steam distribution manifold and into the lances from where the steam is injected into the hay bale through apertures in the lances. The hot steam rises through the hay bale, treating the hay bale as it does so. Typically, the bale is exposed to a continuous supply of steam for approximately 40 minutes, heating the bale to between 70°C and 100°C. When steaming is complete, the hay steamer must be switched off manually to avoid the boiler running dry and potentially causing damage to the steamer.

A further steamer is known from US 6 454 996 B1.

There is therefore a need to provide an improved hay steamer.

### SUMMARY

In a first aspect, there is provided an apparatus for steaming animal fodder, comprising a body defining a chamber in which animal fodder may be placed. The body comprises an upper part and a lower part configured to be placed together to form the chamber. The lower part includes a floor on which the animal fodder is supported. An aperture is provided in the floor of the lower part. The apparatus further comprises a conduit configured to carry steam to the aperture. Steam passing along the conduit and through the aperture enters the chamber formed by the body.

The apparatus also comprises a controller arranged to control passage of steam to and through the aperture in at least one combined cycle. The combined cycle comprises a low-pressure phase and a high pressure phase. In the low-pressure phase, the controller allows steam to pass from the aperture into the chamber at a relatively low pressure. In the high-pressure phase, the controller allows steam to pass from the aperture into the chamber at a relatively high pressure. The terms relatively low pressure and relatively high pressure define the pressures relative to each other. Hence, the relatively low pressure is a lower pressure than the relatively high pressure. In each combined cycle of the least one combined cycle, the low-pressure phase is followed by the high-pressure phase.

It has been found that providing at least one combined cycle of a low-pressure phase and a high pressure-phase when steaming the animal fodder is beneficial. The low-pressure phase may be used to gently introduce steam into the chamber such that a blanket of steam builds up at the bottom of the animal fodder that rests over the aperture. Then, the high-pressure phase may be used provide jets of steam that drive the blanket of steam upwards through the animal fodder. This provides more even steaming throughout the bale, and also allows the temperature of the animal fodder to rise more quickly, resulting a quicker steaming cycle. Without the high-pressure phase, the steam moves through the animal fodder by convection which is slow. The high-pressure phase forces steam up and outwardly through the animal fodder, ensuring the extremities of the animal fodder are treated with steam while also accelerating the temperature rise from the bottom to the top of the animal fodder. Hence, the combination of low-pressure and high-pressure phases has been found to provide improved steaming of the animal fodder.

Optionally, the apparatus may comprise a valve arranged to open and close. When open, the valve allows steam to pass through the aperture. When closed, the valve prevents steam from passing through the aperture. The valve may be located at the aperture or before the aperture. The controller is arranged to open and close the valve. In particular, the controller is arranged to open the valve to allow steam to pass from the aperture in the low-pressure phase of each combined cycle of the least one combined cycle, and also to open the valve to allow steam to pass from the aperture in the high-pressure phase of each combined cycle of the least one combined cycle. Hence, the controller may be used to control when steaming is performed during the low-pressure and high-pressure phases. The controller may be a suitably programmed computer or a suitably arranged electronic circuit.

The controller may also control how the relatively-low and relatively high pressures are achieved. For example, the apparatus may comprise two, three or more apertures provided in the floor, and the controller may control the number of apertures supplied with steam. The controller may provide steam to all apertures in the low-pressure phase, and all the steam to only one aperture in the high-pressure phase.

In a contemplated embodiment, the conduit is a first conduit, the aperture is a first aperture and the valve is a first valve associated with the first aperture. The apparatus may further comprise a second aperture provided in the floor of the lower part, a second conduit configured to carry steam to second aperture thereby allowing steam to pass into the chamber, and a second valve associated with the second aperture. The second valve may be arranged to open and close thereby allowing and preventing steam to pass from the second aperture. In each combined cycle of the least one combined cycle, the controller may be arranged to open the first valve and the second valve to allow steam to pass through the first aperture and the second aperture in the low-pressure phase and in the high-pressure phase. In the low-pressure phase, the controller may be arranged to open the first valve and the second valve simultaneously to allow steam to pass from the first and second apertures simultaneously. In the high-pressure phase, the controller may be arranged to open the first valve and the second valve sequentially to allow steam to pass from the first aperture and the second aperture sequentially.

The controller may use a steam pressure signal to control when steam is allowed to pass form the first and second apertures in the high-pressure mode. Optionally, the controller may be arranged to open the first valve to allow steam to pass through the first aperture when the steam pressure signal indicates that the steam pressure is above an upper pressure threshold and later to close the first valve when the steam pressure signal indicates that the steam pressure has dropped below a lower pressure threshold. The controller may be arranged then to open the second valve to allow steam to pass through the second aperture when the steam pressure signal indicates that the steam pressure is above the upper pressure threshold and later to close the second valve when the steam pressure signal indicates that the steam pressure has dropped below a lower pressure threshold.

In this way, the controller is arranged to allow steam to pass from the first and second apertures sequentially. This ensures that all parts of the steam blanket created during the low-pressure phase are driven upwards during the high-pressure phase.

The apparatus may further comprise a boiler arranged to boil water and generate the steam. In this case, the first conduit and the second conduit may connect the boiler to the first and second aperture respectively, thereby allowing the steam to pass to and through the first and second apertures. A pressure sensor may be positioned in the boiler, for example in the steam chamber of the boiler, and the pressure sensor may be arranged to measure the steam pressure in the boiler and to provide the pressure signal to the controller that provides the measure of the steam pressure. Optionally, the first and second valves are located at or close to the boiler. For example, the first and second valve may be located at first and second outlets from the boiler that connect to the first and second conduits. Alternatively, the boiler may have a single outlet that feeds a manifold that connects to the first and second conduits. In this example, the first and second valves may be provided as part of the manifold or as part of the first and second conduits next to or close to the manifold.

Optionally, the controller is arranged to receive a temperature signal that provides a measure of the temperature in the chamber, and to control passage of the steam from the first and second apertures in the at least one combined cycle according to the temperature indicated by the temperature signal. The controller is arranged to do this such that in a first combined cycle of the at least one combined cycle, the controller controls passage of the steam from the first and second apertures according to the low-pressure phase while the temperature indicated by the temperature signal is below a first temperature threshold, and the controller controls passage of the steam to and through the first and second apertures according to the high-pressure phase when the temperature indicated by the temperature signal rises above the first temperature threshold.

Accordingly, the controller uses a temperature to control when to switch from the low-pressure phase to the high-pressure phase if the first combined cycle. The controller will wait for the temperature to rise to the first temperature threshold before commencing the first high-pressure phase. This sees the low-pressure phase create a blanket of steam that gradually raises the temperature in the chamber until it reaches the first temperature threshold, at which point the high-pressure phase begins to drive the blanket of steam upwardly through the animal fodder.

The apparatus may further comprise a temperature sensor positioned in the upper half of the chamber and wherein the temperature sensor is arranged to measure the temperature in the chamber and to provide the temperature signal to the controller that provides the measure of the temperature in the chamber. The temperature sensor may be positioned at the top of the chamber, for example in an underside of the top of the body, or at or near the top of a wall of the body. In this way, the temperature sensor will measure the temperature at the top of the chamber, and provides a measure of how much heat has spread from the hot steam introduced into the bottom of the chamber through the first and second apertures provided in the floor of the chamber.

Optionally, the controller is arranged to control passage of the steam to and through the aperture in further combined cycles of the at least one combined cycle according to the temperature indicated by the temperature signal. In each combined cycle of the further combined cycles, the controller controls passage of the steam to and through the first and second apertures according to the low-pressure phase while the temperature indicated by the temperature signal rises above a lower temperature threshold, and controls passage of the steam to and through the first and second apertures according to the high-pressure phase when the temperature indicated by the temperature signal rises above a higher temperature threshold.

Hence, during the high-pressure phase of the first combined cycle, the controller monitors the temperature. When the controller determines that the temperature reaches the lower temperature threshold, the controller starts a new combined cycle and starts a new low-pressure phase. This new low pressure phase continues until the temperature reaches the higher temperature threshold, at which time the controller starts the high-pressure phase of new combined cycle. The controller may implement further combined cycles, by setting further lower and higher temperature thresholds. In this way, the controller cycles through a series of low-pressure and high-pressure phases such that a series of steam blankets are generated and then driven through the animal fodder. In this way, the heat provided by the steam spreads through animal fodder, from the bottom to the top.

The controller may implement a final low-pressure phase. For example, the controller may be arranged to control passage of the steam to and through the first and second apertures when the temperature indicated by the temperature signal rises above a final temperature threshold. In this final low-pressure phase, the controller may allow steam to pass from the first and second apertures into the chamber at the relatively low pressure. This allows any steam in the conduits to be purged, such that the apparatus is ready for the next steaming operation.

The controller may control the switching of steam being provided to the first and second apertures during high-pressure phases. For example, between the controller may be arranged in each high-pressure phase of each combined cycle to control passage of the steam to and through the first and second apertures in successive high pressure cycles while the temperature signal indicates that the controller should operate in that high-pressure phase. Moreover, the controller may be arranged to control passage of the steam to and through the first and second apertures in the high pressure phases of successive combined cycles of the least one combined cycle such that the value of the upper pressure threshold alternates between a first upper pressure threshold and a second, different upper pressure threshold. This means that different high-pressure phases exist for different temperature bands. Successive high-temperature phases alternate between a higher and lower upper pressure threshold such that the strength of the steam jets emerging from the first and second apertures alternates between successive high-pressure cycles.

As noted above, the floor may be provided with more than two apertures. For example, the floor may be provided with a third aperture. This third aperture may match the first and second apertures, i.e. the third aperture may have a third conduit and a third valve, and may operate in the same way as the first and second apertures. So, for example, the high-pressure phase may see steam jets provided sequentially from the first, second and third apertures, and then cycled further through the first, second and third apertures. In the low-pressure phases, steam may be provided to and through all of the first, second and third apertures simultaneously. This may all be true for however many apertures are provided in the floor.

Optionally, the apparatus is a hay steamer, and the body may define a chamber of a size to accommodate a standard sized hay bale, for example the chamber may have a size of at least 100 cm x 40 cm x 30 cm.

In a second aspect, there is provided a method of steaming animal fodder in an apparatus comprising a body defining a chamber with a floor on which the animal fodder rests. The method comprises introducing steam into the chamber at a relatively low pressure in a low-pressure phase, followed by introducing steam into the chamber at a relatively high pressure in a high-pressure phase. As noted above, the low-pressure phase may be used to gently introduce steam into the chamber such that a blanket of steam builds up, and the high-pressure phase may be used provide jets of steam that drive the blanket of steam upwards through the animal fodder which has been found to provide improved steaming of the animal fodder.

Steam may be introduced into the chamber beneath the animal fodder during the low-pressure phase and the high-pressure phase, for example through a series of apertures provided in the floor of the apparatus beneath the animal fodder.

Steam may be introduced through all the apertures at the same time during the low-pressure phase, and through one aperture at a time in the high-pressure phase. Passing the steam through only one aperture at a time is an easy way of increasing the pressure of the steam during the high-pressure phase, thereby providing jets of steam to drive upwards the blanket of steam created in the low-pressure phase. This method may be used in conjunction with monitoring the pressure of the steam in the steam supply, and releasing steam at a higher pressure in the high-pressure phase than in the low-pressure phase.

Optionally, during the high-pressure phase, the method may comprise measuring a pressure of the steam and, when the pressure exceeds a higher pressure threshold, releasing the steam to one of the apertures to produce a burst of steam from that aperture. When the pressure falls below a lower pressure threshold, the method may comprise preventing the steam from passing through any of the apertures, thereby allowing the pressure of the steam to increase. The method may further comprise one or more cycles of, when the pressure exceeds the higher pressure threshold once more, releasing the steam to a different aperture from the last aperture to supply steam to the chamber, and when the pressure falls below the lower pressure threshold, preventing the steam from passing through any of the apertures, thereby allowing the pressure of the steam to increase. In this way, steam jets may be provided from each of the apertures in turn. For example, the apertures may form a linear array, and the steam jets may be fired from the apertures in turn working along the linear array, before returning to the first aperture and repeating the cycle again and again.

Also, the method may comprise further cycles of introducing steam into the chamber at a relatively low pressure, followed by introducing steam into the chamber at a relatively high pressure. These cycles see successive blankets of steam generated at the bottom of the animal fodder in the low-pressure phases, before being driven through the animal fodder by the steam jets during the high-pressure phases.

Optionally, the method comprises measuring the rising temperature in the chamber, for example the temperature at to near the top of the chamber as it increases as more and more steam rises to the top of the chamber. Then, the cycles of introducing steam into the chamber at a relatively low pressure followed by introducing steam into the chamber at a relatively high pressure may be performed in response to the measured temperature according to a series of increasingly hot temperature bands. That is, the expected rise in temperature may be divided into a series of temperature bands. For example, a first temperature band may cover all temperatures up to 40°C, followed by temperature bands spanning of 40°C-50°C, 50°C-60°C, 60°C-70°C, 70°C-75°C, 75°C-80°C, 80°C-85°C, and 85°C-90°C such that there is a final temperature threshold of 90°C. A low-pressure phase may be performed during an initial temperature band, and a high-pressure phase may be performed during the next temperature band reached. Then, one or more further cycles maybe performed comprising performing a low-pressure phase during the next temperature band reached, and performing a high-pressure phase during the next temperature band reached. Alternating values for the higher pressure threshold may be used in successive high-pressure phases, such that more powerful steam jets are produced in every other high-pressure phase. The method may comprise a final low-pressure phase when a measured temperature rises above the final temperature threshold.

Optionally, the apparatus may be a hay steamer, and the method may be a method of steaming a hay bale. The hay bale may be placed on the floor of the hay steamer, so as to cover the apertures provided in the floor. A series of three hay bales may be provided along the length of the floor. The chamber may have a size of at least 100 cm x 40 cm x 30 cm. This allows the hay steamer to accommodate standard-sized hay bales.

In a third aspect, there is provided an apparatus for steaming animal fodder comprising a body defining a chamber in which animal fodder may be placed, the body comprising an upper part and a lower part configured to be placed together to form the chamber, the lower part including a floor on which the animal fodder is supported. The apparatus further comprises an aperture provided in the floor of the lower part and a conduit configured to carry steam to the aperture thereby allowing steam to pass into the chamber. The apparatus also comprises a temperature sensor to provide a temperature signal indicating the measured temperature to a controller. The controller is arranged to control passage of steam to and through the aperture according to the measured temperature indicated by the temperature signal.

Providing a temperature sensor allows for convenient temperature-based control of the apparatus. The temperature sensor may be arranged to measure the temperature in the chamber, such as at or close to the top of the chamber. For example, the temperature sensor may be mounted to the upper part of the body such as to the underside of the top of the upper part.

Optionally, the controller is arranged to follow a steaming program that provides steam to the chamber via the aperture while the measured temperature indicated by the temperature signal remains below a final temperature threshold, and to stop the steaming program responsive to the measured temperature indicated by the temperature signal rising to equal or exceed the final temperature threshold. Hence, an automatic shut off is provided that will stop the steaming once it is complete as indicated by final temperature threshold being reached. This arrangement is advantageous as it does not require a user to stay with the apparatus and monitor when the steaming is complete. Also, stopping the steaming program based on temperature is better than stopping the steaming program based on time as it is the final temperature of the animal fodder that determines the efficacy of the steaming rather than the amount of time to which the animal fodder is exposed to steam.

The controller may be arranged to control passage of steam to and through the aperture in a cycle, comprising a low-pressure phase followed by a high-pressure phase according to a series of increasingly hot temperature bands such that a low-pressure phase is performed when the measured temperature indicated by the temperature signal is within an initial temperature band and a high-pressure phase is performed when the measured temperature indicated by the temperature signal is within the next temperature band. In the low-pressure phase, the controller allows steam to pass to and through the aperture into the chamber at a relatively low pressure. In the high-pressure phase, the controller allows steam to pass to and through the aperture into the chamber at a relatively high pressure. The controller may be arranged to control passage of steam to and through the aperture in further cycles by performing a low-pressure phase during the next temperature band reached, and performing a high-pressure phase during the next temperature band reached.

The apparatus of the third aspect, and as modified in the preceding paragraphs, may comprise the controller which may be arranged to follow a first steaming program that provides steam to the chamber via the aperture while receiving the temperature signal from the temperature sensor, to determine a rate at which the measured temperature indicated by the temperature signal has risen and, if the rate is above a threshold rate, to begin following a second steaming program. This allows the controller to switch heating programs if the temperature rises in the chamber quickly. The rate of temperature rise may be quick where there is a small amount of animal fodder in the chamber to absorb heat from the steam. The rate may be determined in different ways. For example, the controller may be arranged to determine an amount of time elapsed when the measured temperature indicated by the temperature signal reaches a preset temperature value and, if the amount of time elapsed is below a time threshold value, to begin following the second steaming program. The time elapsed may be the amount of time elapsed since the controller started the first program or since the controller allowed steam to pass to and through the aperture. As another example, the controller may be arranged to determine the measured temperature indicated by the temperature signal at a preset amount of time and, if the measured temperature indicated by the temperature signal has risen above a temperature threshold value, to begin following a second steaming program. The preset amount of time may be the amount of time elapsed since the controller started the first program or since the controller allowed steam to pass to and through the aperture.

Optionally, the controller is arranged to control passage of steam to and through the aperture in a cycle, comprising a low-pressure phase in which the controller allows steam to pass to and through the aperture into the chamber at a relatively low pressure followed by a high-pressure phase in which the controller allows steam to pass to and through the aperture into the chamber at a relatively high pressure.

In the first program, the controller may be arranged to control passage of steam to and through the aperture in the low-pressure and high-pressure phases according to a series of increasingly hot temperature bands such that one or more low-pressure phases are performed when the measured temperature indicated by the temperature signal is within a certain temperature band or certain temperature bands, and such that one or more high-pressure phases are performed when the measured temperature indicated by the temperature signal is within a certain other temperature band or certain other temperature bands. The temperature bands may be defined such that the controller alternates between the low-pressure and high-pressure phases. The temperature bands may comprise a first temperature band up to 40°C, followed by temperature bands spanning of 40°C-50°C, 50°C-60°C, 60°C-70°C, 70°C-75°C, 75°C-80°C, 80°C-85°C, and 85°C-90°C such that there is a final temperature threshold of 90°C. The controller may be arranged to stop the steaming as soon as the final temperature threshold is reached, or the controller may be arranged to maintain the final temperature threshold for a period of time before stopping the steaming.

In the second program, the controller may be arranged to control passage of steam to and through the aperture in the low-pressure and high-pressure phases according to a series of time bands such that one or more low-pressure phases are performed when the time elapsed is within a certain time band or certain time bands, and such that one or more high-pressure phases are performed when the time elapsed is within a certain other time band or certain other time bands. The time bands may be defined such that the controller alternates between the low-pressure and high-pressure phases. Each time band may be 200s long. Therefore, if the rate of temperature rise is found to be high (i.e. in excess of the threshold rate), the controller switches from operating in a temperature controlled way to operating in a time controlled way.

The apparatus of the third aspect, and as modified in the preceding paragraphs, may comprise the controller which may be arranged to use the measured temperature indicated by the temperature signal to indicate that a descaling operation should be performed. For example, the controller may be arranged to determine if the measured temperature indicated by the temperature signal has risen to or above a maximum temperature threshold to indicate that a descaling operation should be performed. For example, the controller may be arranged to indicate that a descaling operation should be performed each time the measured temperature indicated by the temperature signal equals or exceeds the maximum temperature threshold. Alternatively, the controller may be arranged to indicate that a descaling operation should be performed if the measured temperature indicated by the temperature signal equals or exceeds the maximum temperature threshold more than a predetermined number of times within a certain time period. Conveniently, this helps ensure the apparatus is descaled only when needed, rather than relying on a user to set descaling manually which may see this done too frequently or too infrequently. The apparatus may comprise a boiler operable to produce the steam, and the temperature sensor may be arranged to measure the temperature of a heating element of the boiler. The descaling operation may effect descaling of the heater element in the boiler, for example by heating the heating element to a raised temperature (raised relative to normal operation during steaming) and/or heating the element for a prolonged time (prolonged relative to normal operation during steaming).

In a fourth aspect, there is provided a method of steaming animal fodder using an apparatus comprising a body forming a chamber with a floor on which the animal fodder rests. The apparatus further comprises an aperture provided in the floor of the lower part and a conduit configured to carry steam to the aperture thereby allowing steam to pass into the chamber. A temperature sensor provides a temperature signal indicating the measured temperature to a controller. The controller controls passage of steam to and through the aperture according to the measured temperature indicated by the temperature signal.

Providing a temperature sensor allows for convenient temperature-based control of the apparatus. The temperature sensor may measure the temperature in the chamber, such as at or close to the top of the chamber. For example, the temperature sensor may be mounted to the upper part of the body such as to the underside of the top of the upper part.

Optionally, the controller follows a steaming program that provides steam to the chamber via the aperture while the measured temperature indicated by the temperature signal remains below a final temperature threshold. When the measured temperature indicated by the temperature signal rises to equal or exceed the final temperature threshold, the controller stops the steaming program.

The method may further comprise the controller controlling passage of the steam to and through the aperture in a cycle, comprising a low-pressure phase followed by a high-pressure phase according to a series of increasingly hot temperature bands such that a low-pressure phase is performed when the measured temperature indicated by the temperature signal is within an initial temperature band and a high-pressure phase is performed when the measured temperature indicated by the temperature signal is within the next temperature band. In the low-pressure phase, the controller allows steam to pass to and through the aperture into the chamber at a relatively low pressure. In the high-pressure phase, the controller allows steam to pass to and through the aperture into the chamber at a relatively high pressure. The controller may control passage of steam to and through the aperture in further cycles by performing a low-pressure phase during the next temperature band reached, and performing a high-pressure phase during the next temperature band reached.

The method of the fourth aspect, and as modified in the preceding paragraphs, may comprise the controller following a first steaming program that provides steam to the chamber via the aperture while receiving the temperature signal from the temperature sensor, determining a rate at which the measured temperature indicated by the temperature signal has risen and, if the rate is above a threshold rate, beginning to follow a second steaming program. The rate may be determined in different ways. For example, the controller may determine an amount of time elapsed when the measured temperature indicated by the temperature signal reaches a preset temperature value and, if the amount of time elapsed is below a time threshold value, the controller may begin following the second steaming program. The time elapsed may be the amount of time elapsed since the controller started the first program or since the controller allowed steam to pass to and through the aperture. As another example, the controller may determine the measured temperature indicated by the temperature signal at a preset amount of time and, if the measured temperature indicated by the temperature signal has risen above a temperature threshold value, the controller may begin following a second steaming program. The preset amount of time may be the amount of time elapsed since the controller started the first program or since the controller allowed steam to pass to and through the aperture.

The controller may control passage of steam to and through the aperture in a cycle, comprising a low-pressure phase in which the controller allows steam to pass to and through the aperture into the chamber at a relatively low pressure followed by a high-pressure phase in which the controller allows steam to pass to and through the aperture into the chamber at a relatively high pressure. In the first program, the controller may control passage of steam to and through the aperture in the low-pressure and high-pressure phases according to a series of increasingly hot temperature bands such that one or more low-pressure phases are performed when the measured temperature indicated by the temperature signal is within a certain temperature band or certain temperature bands, and such that one or more high-pressure phases are performed when the measured temperature indicated by the temperature signal is within a certain other temperature band or certain other temperature bands. The temperature bands may be defined such that the controller alternates between the low-pressure and high-pressure phases. In the second program, the controller may control passage of steam to and through the aperture in the low-pressure and high-pressure phases according to a series of time bands such that one or more low-pressure phases are performed when the time elapsed is within a certain time band or certain time bands, and such that one or more high-pressure phases are performed when the time elapsed is within a certain other time band or certain other time bands. The time bands may be defined such that the controller alternates between the low-pressure and high-pressure phases. Therefore, if the rate of temperature rise is found to be high (i.e. in excess of the threshold rate), the controller switches from operating in a temperature controlled way to operating in a time controlled way.

The aperture may be one of a plurality of apertures provided in the floor of the lower part. Each aperture may have an associated conduit configured to carry steam to the aperture thereby allowing steam to pass into the chamber. The floor may comprise two adjacent zones, each zone including one or more apertures of the plurality of apertures. For example, the length of the floor may be divided into two zones, and each zone may correspond (or substantially correspond) to a half of the floor. In the first program, the controller may control passage of steam to and through the apertures of both the first and second zones. In the second program, the controller may control passage of steam to and through only the apertures of the first zone.

The method of the fourth aspect, and as modified in the preceding paragraphs, may comprise the controller using the measured temperature indicated by the temperature signal to indicate that a descaling operation should be performed. For example, the controller may determine a rate at which the measured temperature indicated by the temperature signal has risen and, if the rate is above a threshold rate, indicate that a descaling operation should be performed. The apparatus may comprise a boiler operable to produce the steam, and the temperature sensor may be arranged to measure the temperature of a heating element of the boiler. The descaling operation may effect descaling of the heater element in the boiler, for example by heating the heating element to a raised temperature (raised relative to normal operation during steaming) and/or heating the element for a prolonged time (prolonged relative to normal operation during steaming).

In a fifth aspect, there is provided an apparatus for steaming animal fodder comprising a body defining a chamber in which animal fodder may be placed, the body comprising an upper part and a lower part configured to be placed together to form the chamber, the lower part including a floor on which the animal fodder is supported. The apparatus further comprises a boiler operable to boil water and create steam, an aperture provided in the floor of the lower part and a conduit configured to carry steam from the boiler to the aperture thereby allowing steam to pass into the chamber. The apparatus also comprises a showerhead and a hose connected or configured to be connected to the boiler to allow water heated by the boiler to be supplied to the showerhead.

In this way, the apparatus may also be used to shower an animal such as a horse, using water heated by the boiler of the apparatus.

The showerhead and the hose may be permanently connected to the apparatus or may be configured to be connected and disconnected to the apparatus, for example whenever a user wants to use the showerhead. The hose may be connected or connectable to the conduit leading from the boiler to the aperture. Alternatively, the apparatus may be provided with a further conduit ending in an external outlet that discharges externally to the chamber. The further conduit may connect the boiler to the external outlet. Optionally, the external outlet may be arranged to provide a pressure relief outlet for the boiler if the pressure in the boiler rises too high. The external outlet may also provide a connection for the hose thereby providing a path for water to flow from the boiler to the showerhead, whether or not it is arranged to provide a pressure relief outlet for the boiler. The boiler may comprise a heater element and a temperature sensor operable to measure the temperature of water in the boiler. The apparatus may comprise a controller operable to control the heater element to heat the water in the boiler to a target temperature and then to maintain the water in the boiler at the target temperature.

Ina sixth aspect, there is provided a method of operating the apparatus of the fifth aspect (including as modified with any of the optional features described above) to provide a shower for an animal. The method comprises operating a heating element of the boiler to heat water in the boiler, and to provide the heated water to the showerhead. The boiler may comprise a heater element and a temperature sensor operable to measure the temperature of water in the boiler. The apparatus may comprise a controller, and the method may comprise the controller controlling the heater element to heat the water in the boiler to a target temperature and then to maintain the water in the boiler at the target temperature. The boiler may also be provided with a pressure sensor to sense the pressure in the boiler (either water pressure or steam pressure), and the controller may be operable to open and close an inlet valve to the boiler to ensure a pressure at or above a target pressure.

### LIST OF FIGURES

In order that the invention can be more readily understood, reference will now be made by way of example only, to the accompanying drawings in which:
Figure 1 is a perspective view of a hay steamer when closed;
Figure 2 is a perspective view of the hay steamer of Figure 1, when open;
Figure 3 corresponds to the view of Figure 2, but shows the hay steamer loaded with a hay bale;
Figure 4 is a sectional view of the hay steamer of Figure 1 loaded with a hay bale;
Figure 5 is a perspective view of the hay steamer of Figure 1 stood on its end and showing the underside of the hay steamer; and
Figure 6 corresponds to the perspective view of Figure 5, but shows the sump guard and water tank removed from the hay steamer;
Figure 7 is a detail from Figure 6;
Figure 8 is a schematic representation of an overall method of steaming hay implemented by a controller of the hay steamer;
Figures 9A and 9B are a schematic representations of methods of steaming hay implemented by the controller of the hay steamer in first and second sets of high pressure phases;
Figures 10A-10F are cross-sectional views of the hay steamer of Figure 3 showing steam in the steamer during various stages of steaming;
Figure 11 is a schematic representation of a second overall method of steaming hay implemented by a controller of the hay steamer;

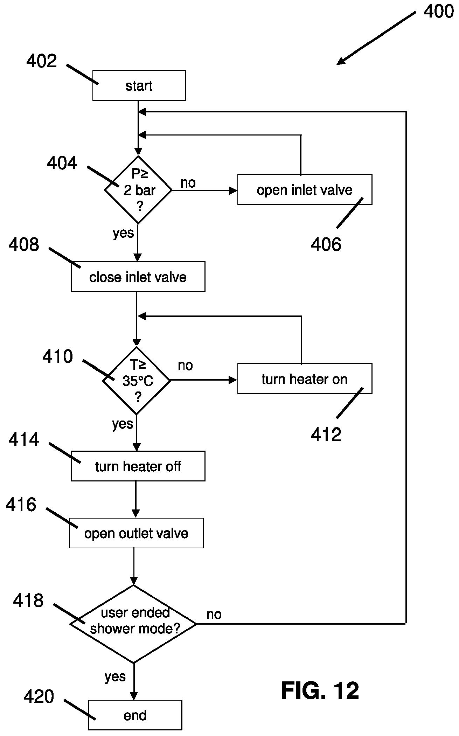

Figure 12 is a schematic representation of a method of providing heated water to a showerhead implemented by the controller of the hay steamer; and
Figure 13 corresponds to the perspective view of Figure 5, but shows a shower head attachment.

### DETAILED DESCRIPTION

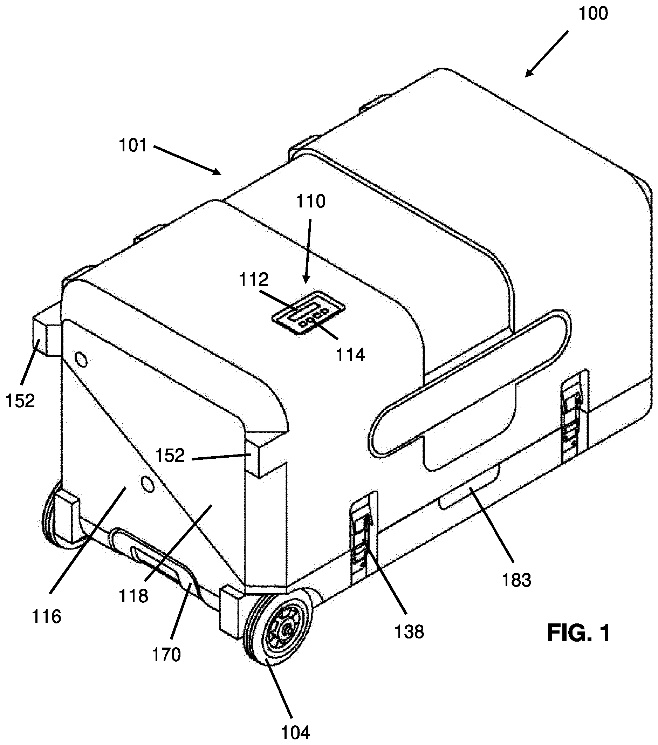

Figure 1 shows a hay steamer 100 according to an embodiment of the invention. Although described as a hay steamer 100, it will be understood that the hay steamer 100 is not limited to steaming hay. For example, the hay steamer 100 may be used for steaming other types of animal fodder such as straw, silage and haylage. The hay steamer 100 may also be used for growing plants, fruits and vegetables. For example, the hay steamer 100 may be used to pasteurise straw or other substrate when growing mushrooms.

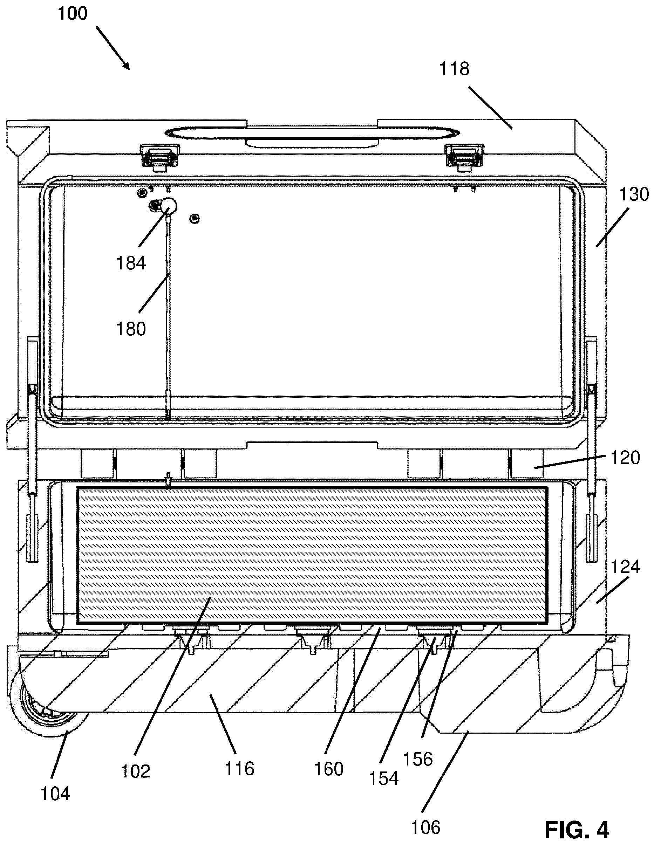

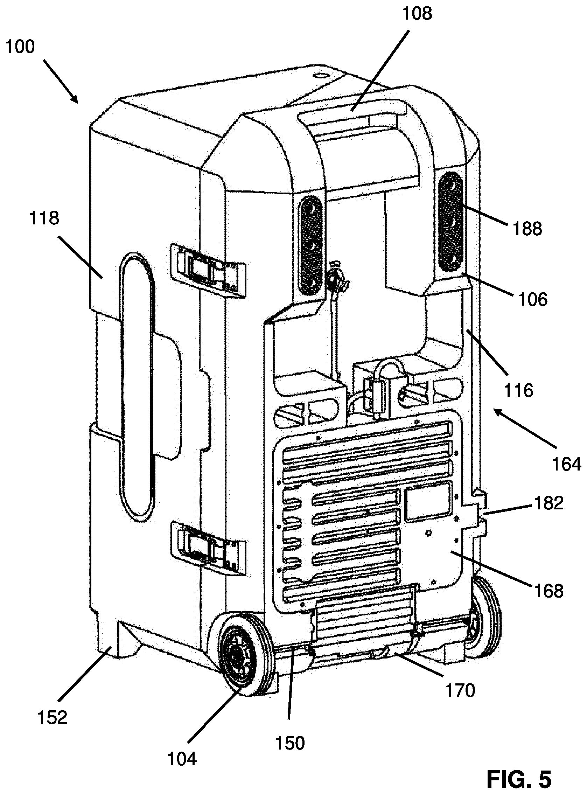

The hay steamer 100 resembles a wheeled-trunk, and has a size suitable for containing a standard-sized hay bale 102. In normal use, the hay steamer 100 rests on a pair of wheels 104 at one end and a pair of feet 106 at the other end (see Figures 4 and 5). A handle 108 (see Figure 5) is provided at the same end as the feet 106. The handle 108 may be used to lift the end of the hay steamer 100 so that the hay steamer 100 may be rolled on its wheels 104 from one location to another. A pair of skid plates 188 are provided on the feet 106. Returning to Figure 1, the hay steamer 100A is provided with a user interface 110 having a display 112 and control buttons 114.

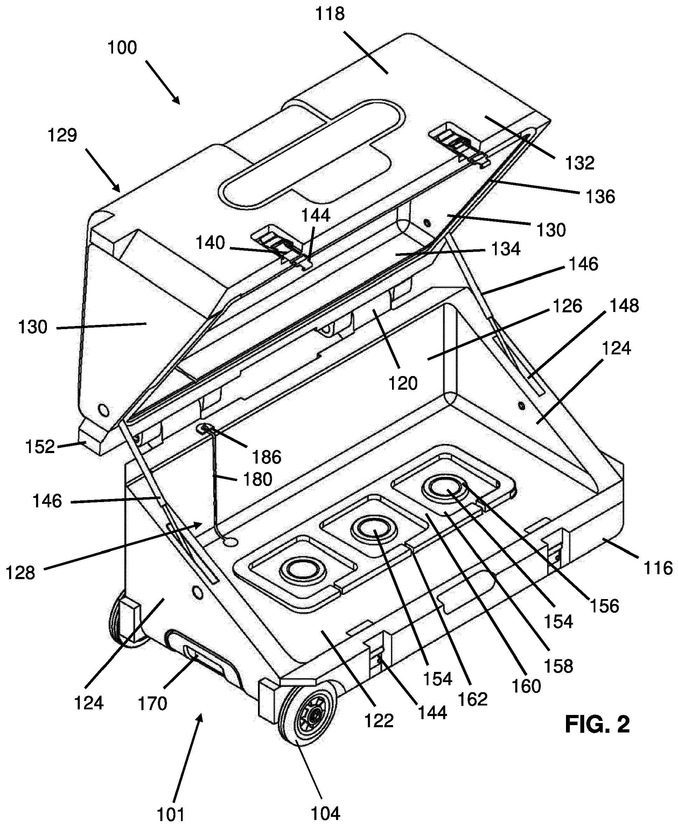

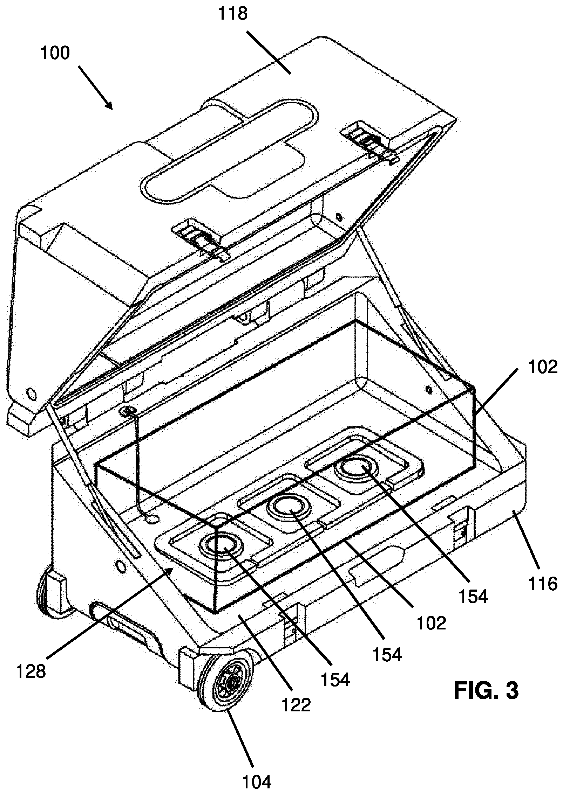

As seen more clearly in Figures 2 and 3, the hay steamer 100 has a body 101 comprising a lower part 116 and an upper part 118. Both the lower part 116 and the upper part 118 are generally wedge shaped. The lower part 116 and the upper part 118 are joined by a pair of hinges 120 such that the upper part 118 may be rotated up and clear of the lower part 116 to open the hay steamer 100 and provide access to the hay steamer 100 for loading and unloading a hay bale 102.

The lower part 116 comprises a floor 122 for supporting a hay bale 102, and sloping side walls 124 that join a high back wall 126 of the lower part 116. The lower part 116 has an open front with no lip to the front of the floor 122. This configuration of the lower part 116 provides easy access to the interior 128 of the hay steamer 100 through a large aperture defined by the lower part 116 and the upper part 118 of the hay steamer 100 when opened. In particular, the absence of a front wall or even a lip at the front of the floor 122 makes it much easier to load and unload a hay bale 102 than the prior art hay steamer 100 described above. A further advantage is that the lack of front wall or lip to the floor 122 allows water to drain freely from the hay steamer 100. The floor 122 has a slight slope (e.g. 2°) from back to front to assist further this water drainage.

The upper part 118 has a wedge shape that complements the shape of the lower part 116, with a top wall 129 and sloping side walls 130 that extend from a high front wall 132 to meet a shallow back wall 134. The pair of hinges 120 are provided on the back wall 126 of the lower part 116 and the back wall 134 of the upper part 118. Each hinge 120 comprises alternating knuckles and an interlocking metal pin that passes through the knuckles. In this embodiment, the knuckles are formed integrally with the lower part 116 and the upper part 118. The complementary wedge shapes of the lower part 116 and the upper part 118 means that the lower part 116 and the upper part 118 close to abut each other and form the general trunk shape of the hay steamer 100.

Figures 2 and 3 show that the upper part 118 is provided with a resilient seal 136 that extends around the aperture formed by the upper part 118. The seal 136 is retained within a groove (not shown) that extends along lower surfaces of the back wall 134, the side walls 130 and the front wall 132. When the upper part 118 is in the closed position shown in Figure 1, the seal 136 is seated in a complementary groove (not shown) provided in the upper surfaces of the lower part 116. The seal 136 prevents steam from escaping from the interior 128 of the hay steamer 100 during steaming cycles.

The hay steamer 100 may be secured shut using fasteners 138 provided on the front of the hay steamer 100. In this embodiment, the fasteners 138 comprise a pair of straps 140 that hang from the upper part 118 and that are provided with clasps 142 that hook around catches 144 provided in the lower part 116, as can be seen best from Figures 1 and 2. The straps 140 have a cam handle that allows the clasps 142 to be drawn up against the catches 144 into firm engagement. The straps 140 pass through a tri-glide slide (webbing slide) that allows their length to be adjusted, for example to adjust the force required to secure the hay steamer 100 shut and to accommodate any stretching that may occur over time.

The upper part 118 of the hay steamer 100 is held in the open position by gas struts 146 provided on the sides of the hay steamer 100. These gas struts 146 may also assist in moving the upper part 118 to the open position and in allowing the upper art 118 to close gently. The bottom of each gas strut 146 is received within a respective slot 148 provided in one of the side walls 124 of the lower part 116 of the hay steamer 100 where it is pivotably mounted, and the top of each gas strut 146 is pivotably attached to the upper part 118.

The pair of wheels 104 are provided at opposite corners of the left end of the lower part 116 of the hay steamer 100 (when viewed from in front, although the wheels may be provided at the right end), such that the wheels 104 may support the hay steamer 100 when resting both horizontally and vertically. The wheels 104 are connected by an axle 150. A pair of rests 152 project from the left-hand side wall 130 of the upper part 118 above the wheels 104, such that the hay steamer 100 is supported on the wheels 104 and the rests 152 when it is stored vertically (for example, to provide a smaller footprint during storage as shown in Figure 5).

Figures 3 and 4 show the hay steamer 100 with the upper part 118 raised in the open position, and with a hay bale 102 loaded into the interior 128 of the hay steamer 100. As can be seen, the interior 128 of the hay steamer 100 forms a chamber 128 shaped and sized to accommodate a standard-sized hay bale 102. The hay bale 102 rests on the floor 122 of the lower part 116 so as to cover a set of apertures provided in the floor 122 that function as a set of steam vents 154. In this embodiment, three steam vents 154 are equally spaced apart longitudinally, along the centreline of the chamber 128. The steam vents 154 have edges 156 that are slightly raised from the floor 122, see Figures 2 and 4. Each steam vent 154 also sits within a compartment 158, and the three compartments 158 are formed by a raised frame 160 provided in the floor 122. The hay bale 102 rests on the frame 160, but not the edges 158 of the steam vents 154 which do not extend so high from the floor 122 (as best seen in Figure 4). This arrangement allows steam to spread before entering the hay bale 102. Small gaps are provided in the front of the frame 160 to provide channels 162 linking the compartments to the front of the floor 122. This allows condensed steam to exit the compartments 158 during steaming, which prevents the hay bale 102 from sitting in puddles of water that would otherwise form in the compartments 158. The channels 162 also allow water to drain from the compartments 158 when the hay steamer 100 is being cleaned, for example when washing the interior 128 of the hay steamer 100 using a hose.

The frame 160 is of a low height to ease placing hay bales 102 into the hay steamer 100. In particular, the absence of a lip at the front of the floor 122 means that hay bales 102 need be raised only a small height before being placed on the floor 122 and slid into position over the steam vents 154. This may be contrasted to the prior art steamer of GB 2,454,969 where a hay bale 102 must be lifted high to clear a tall front wall before being dropped onto lances extending from the floor 122. Once the hay bale 102 has settled onto the lances, there is little if any opportunity to adjust the position of the hay bale 102. In contrast, Figures 2 and 3 herein show that a hay bale 102 need only be placed onto the floor 122 before being slid into position to cover the three steam vents 154. Hence, no precision is required when loading a heavy hay bale 102 into the hay steamer 100, much to the benefit of a user. Unloading a hay bale 102 from the hay steamer 100 of Figures 2 and 3 is even easier. The absence of lances and a front wall (or even a lip) at the front of the floor 122 ensures that a hay bale 102 may be simply slid out of the hay steamer 100 without any lifting being required.

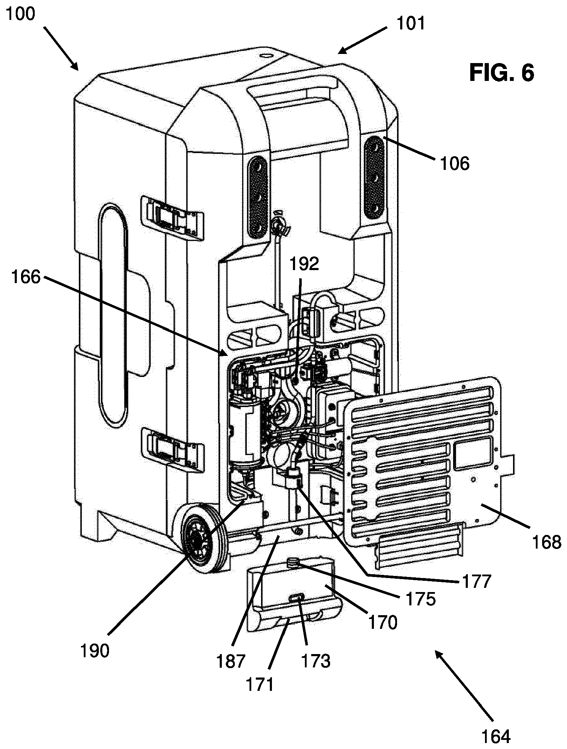

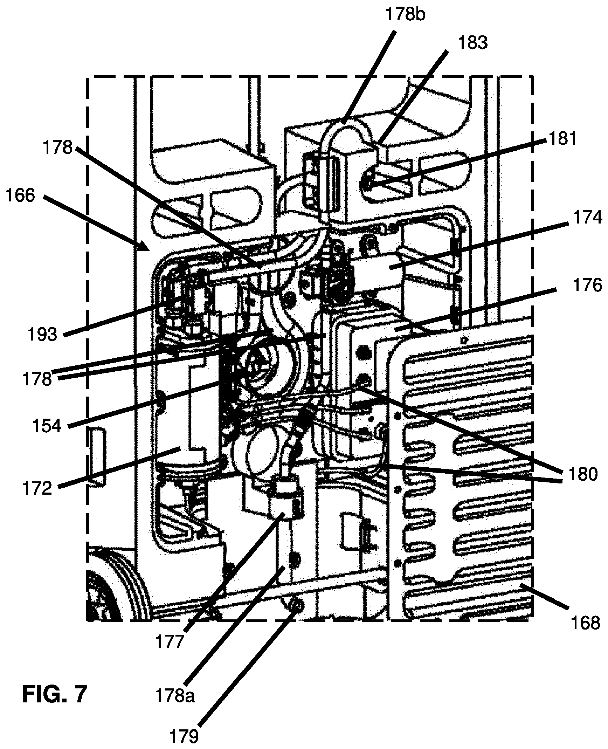

As shown in Figures 5 and 6, the underside 164 of the lower part 116 of the hay steamer 100 is provided with a recess 166 covered by the sump guard 168. The recess 166 is used to house a water tank 170, a boiler 172, a pump 174 and a controller 176 (see also the detail of Figure 7). Hoses 178, 178a, 178b connect the water tank 170 to the pump 174, the pump 174 to the boiler 172, the boiler 172 to the three steam vents 154, and the boiler 172 to an external outlet 181. Wires 180 connect the controller 176 to a power inlet 182 (see Figure 5), the boiler 172, the pump 174, a thermocouple 184 provided in the chamber 128 (see Figure 4), a safety switch 186 (See Figure 2), and to the user interface 110 provided on the upper part 118 of the hay steamer 100.

The water tank 170 is located in a bay 187 formed in the underside 164 of the lower part 116 and is provided with a handle 171 such that the water tank 170 may be easily removed for refilling. In this embodiment the water tank 170 may be filled with up 3.5 litres of water, and then pushed back into the bay 187 where it is positively held in place by an interference fit between a protrusion 173 provided on the underside 164 of the tank 170 and the axle 150 that connects the wheels 104. The tank 170 is provided with a connector 175 (such as a push fit connector) that co-operates with a complementary push fit connection 177 provided at the end of a hose 178a that extends to the boiler 172. A feeder hose 179 also connects to the complementary push fit connection 177, and the feeder hose 179 extends into the water tank 170 through the filling hole provided in the push fit connector 175. The end 179a of the hose 179 is provided with a downward bend such that it draws water from the bottom of the water tank 170. The complementary push fit connection 177 provided on the hose 178a may also be used to provide a direct connection to a hose pipe (not shown) for when a suitable mains water supply is available. The feeder hose 179 is disconnected and a hose pipe provided with the common type of push fit connector may be connected to the hose 178a via the complementary push fit connection 177.

In either arrangement, water from the water tank 170 or the hose pipe flows to the pump 174 via hose 178a, and then onto the boiler 172. Water flow to the boiler 172 is controlled by the controller 176 operating the pump 174 and an inlet valve (not shown). A check valve can be used to prevent water flowing back into the pump 174. Steam created in the boiler 172 flows to the steam vents 154 from three outlets of the boiler 172, from where it passes through the hay bale 102, thereby killing spores and dust particles in the hay bale 102. Steam delivery is controlled by the controller 176 using a valve set 193 located at the outlets of the boiler 172 to the steam vents 154 to allow any or all of the steam vents 154 to be selected.

To steam a hay bale 102, a user will first open the hay steamer 100 by lifting the front of the upper part 118 on its gas struts 146, using a handle 183 provided for this purpose. The upper part 118 is kept open by the gas struts 146, such that the user's hands are free to place the hay bale 102 on the floor 122 of the lower part 116, and to slide the hay bale 102 into position on the frame 160 to cover the steam vents 154.

The user may then close the upper part 118 and secure the straps 140 to seal the chamber 128. The user may check that the water tank 170 contains water or that water is supplied by a hose pipe to the mains connector. However, a warning is provided on the display 112 if the controller 176 detects that the boiler 172 is empty (and operation of the boiler 172 is disabled).

The user can select a steaming cycle by pressing an appropriate start button 114 provided on the user interface 110. This sends a signal to the controller 176 to pump water to the boiler 172, and turn on the boiler 172 to boil the water and create steam. As the steam is produced, the pressure in the boiler 172 is monitored by the controller 176. When the pressure reaches a threshold pressure, the controller 176 operates the valve set to allow steam to flow to one or more of the steam vents 154 and into the hay bale 102.

The hot steam will rise through the hay bale 102, thereby removing and killing the bacteria, mould spores, fungi and dust particles present in the hay bale 102. Steam will rise to the top of the chamber 128, causing the temperature at the top of the chamber 128 to rise steadily. This rising temperature is measured by the thermocouple 184 during the steaming cycle. Once the temperature measured by the thermocouple 184 reaches a threshold temperature, the controller 176 automatically switches off the boiler 172 and pump 174. Advantageously, the automatic switch-off function allows the user to start the hay steamer 100 and then leave without the risk of the boiler 172 boiling dry, therefore avoiding damage to the hay steamer 100. A button 114 on the user interface 110 allows the user to stop steaming at any time, if so desired. At the end of steaming, a flush is performed to relive any pressure remaining in the boiler 172 by opening a valve of the valve set 193 that connects the boiler 172 to the external outlet 181 via hose 178b. The external outlet 181 discharges steam to atmosphere from a safe location on the underside 164 of the hay steamer 100, see Figure 7. The external outlet 181 may also be used to relieve pressure in the boiler 172 should the boiler 172 and/or controller 176 malfunction and allow too great a pressure to build up in the boiler 172.

To retrieve the treated hay bale 102, the user releases the straps 140 and opens the upper part 118. The treated hay bale 102 may then be easily slid across the floor 122 and out of the hay steamer 100, ready for use. There is also a safety switch 186 positioned on the top of the back wall 126 of the lower part 116 that detects when the hay steamer 100 is open. The safety switch 186 may be any suitable type, such as a mechanical contact switch or a magnetic, electrical or optical sensor. The safety switch 186 is connected to the controller 176 via wires 180. If the safety switch 186 detects that the hay steamer 100 is open, the controller 176 sends a signal to turn off the boiler 172 and/or shut the valve set (not shown) such that no steam can pass through the steam vents 154 and into the chamber 128. This ensures that the steaming cycle can only run when the hay steamer 100 is closed.

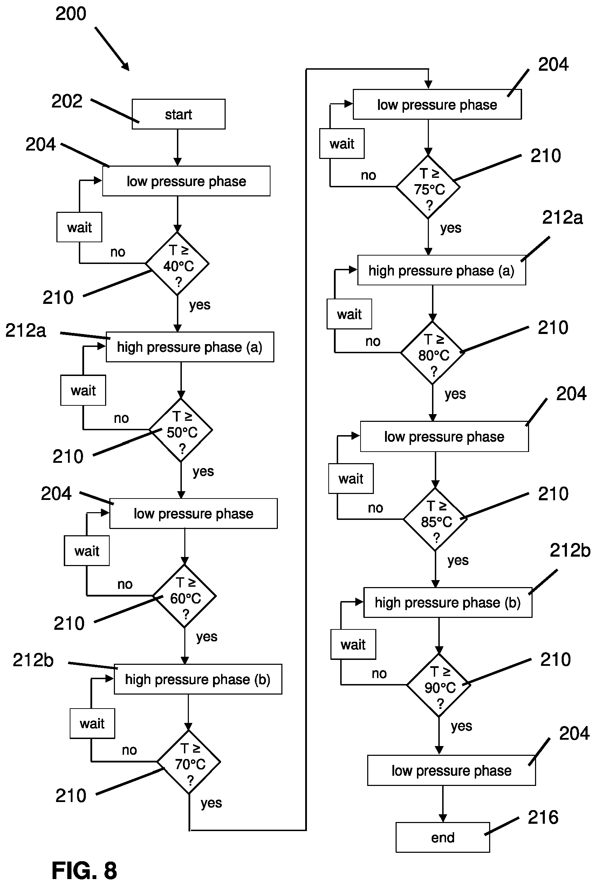

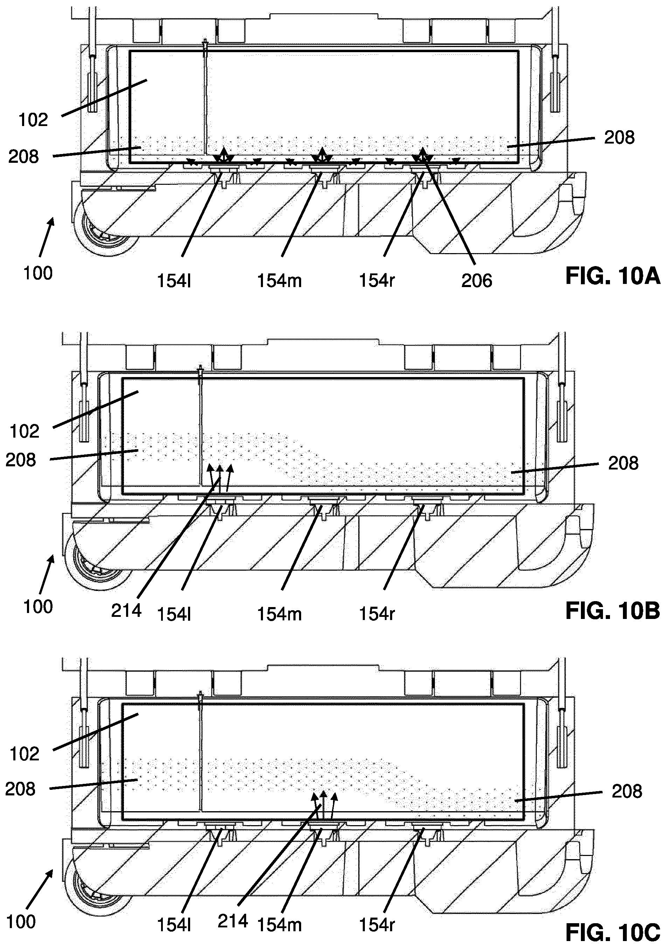

Figure 8 shows how the controller 176 may implement a method 200 of steaming a hay bale 102. The method 200 starts at 202 where the controller 176 starts a low-pressure phase 204 while monitoring the temperature in the chamber 128 as indicated by the temperature signal received from the thermocouple 184. In this and subsequent low-pressure phases 204, the controller 176 supplies all three steam vents 154 with low-pressure steam 206 such that low-pressure steam 206 enters the hay bale 102 from all three steam vents 154. The low-pressure steam 206 enters the chamber 128 and hence the hay bale 102 at low pressure. This creates a "blanket" of steam 208 in the hay bale 102, as shown in Figure 10A.

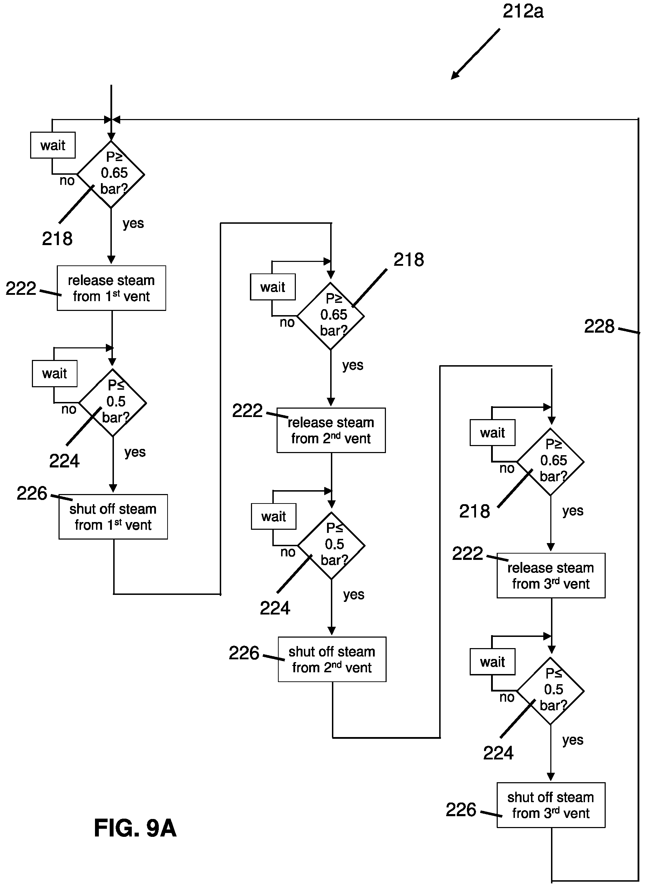

At 210, the controller 176 determines whether the temperature in the chamber 128 indicated by the thermocouple 184 has risen to 40°C. The controller 176 continues to wait until the controller 176 determines that the temperature has risen to 40°C at a subsequent temperature check 210. When, at 210, the controller 176 determines that the temperature has risen to 40°C, the controller 176 switches to a first type of high-pressure phase 212a, indicated as high-pressure phase (a) in the figures. An example of high-pressure phase (a) 212a is provided in Figure 9A, and will be described in more detail below. In this and subsequent high-pressure phases 212a, 212b, the controller 176 provides high-pressure steam 214 to one steam vent 154 at a time. The higher pressure of the steam 214 as it passes from each steam vent 154 in turn causes steam jets 214 that drive the steam blanket 208 produced in the preceding low-pressure phase 204 upwardly through the hay bale 102.

The controller 176 then alternates through successive low-pressure phases 204 and high-pressure phases 212a, 212b. The high-pressure phases 212a, 212b also alternate, between the first type of high-pressure phase 212a and a second type of high-pressure phase 212b. The controller 176 switches between low-pressure phases 204 and high-pressure phases 212a, 212b based on the temperature in the chamber 128 as tested at steps 210. As can be seen from Figure 8, the controller 176 switches from one phase to the next at temperatures of 40°C, 50°C, 60°C, 70°C, 75°C, 80°C, 85°C and 90°C. Smaller temperature bands are used at higher temperatures to reflect the increased difficulty in raising the temperature of the hay bale 102 when at these higher temperatures. As a result, the time spent operating in each temperature band is more similar. The final temperature threshold of 90°C sees the controller 176 implement a final low-pressure phase 204 before ending the method 100 at 216. The method 100 may end with the controller 176 flushing the boiler 172 by opening a valve to the external outlet 181, as described above.

In each low pressure phase 204, the controller 176 allows steam from the boiler 172 to pass to all three steam vents 154 continuously. This continuous supply of steam to all three steam vents 154 simultaneously ensures that low pressure steam 206 is delivered to the hay bale 102. Pressures of around 0.1 bar to 0.5 bar may be used. The low pressure steam 206 exits the steam vents 54 and passes into the hay bale 102, both directly and also after spreading thorough the compartments 158 beneath the hay bale 102.

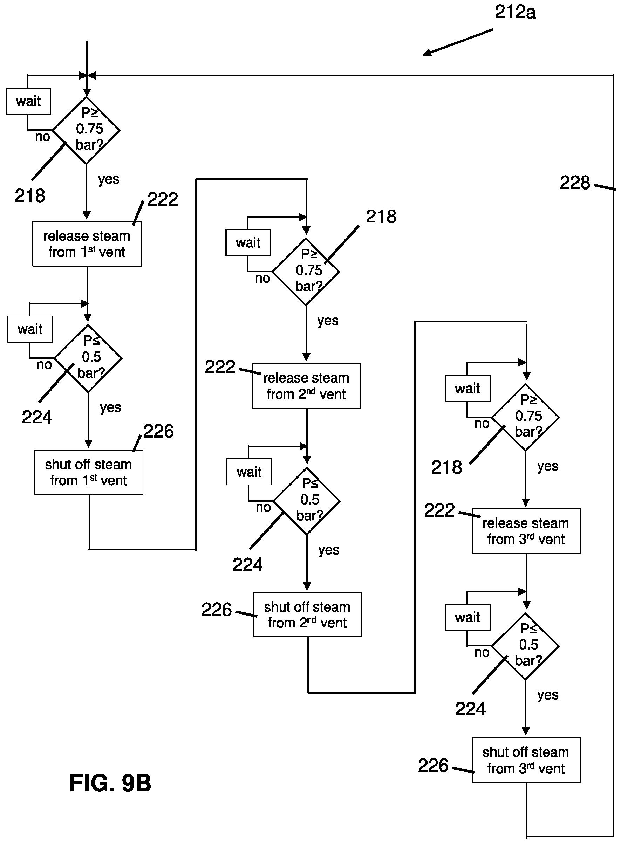

Figure 9A shows an example of the high-pressure phases 212a, and Figure 9B shows an example of the high-pressure phases 212b. A high pressure phase 212a begins at pressure rise test step 218 where the controller 176 determines whether the pressure in the boiler 172 is more than an upper pressure threshold of 0.65 bar. If not, the controller 176 waits, and continues to do so until a test at 218 indicates the pressure to have exceeded 0.65 bar. Then, the controller 176 releases steam at 222 by directing high pressure steam 214 to the first steam vent 154 only, which is the left steam vent 154l in this embodiment. As the steam is delivered to only a single steam vent 154, a higher steam pressure is achieved which, as shown in Figure 10B, causes a steam jet 214 to fire from the left steam vent 154l. Little if any steam spreads through the compartment 158 before entering the hay bale 102. The steam jet 214 drives the portion of the steam blanket 208 above the left steam vent 154l up through the hay bale 102. This continues until the controller 176 detects at pressure drop test step 224 that the pressure in the boiler 172 has dropped below 0.5 bar. When the pressure drops below 0.5 bar, at 226 the controller 176 shuts off the steam supply from the boiler 172 so that the pressure in the boiler 172 may rise again.

The controller 176 then performs further pressure rise tests 218 while waiting until the pressure rises above the upper pressure threshold of 0.65 bar. The controller 176 then directs steam to the second steam vent 154 only, which is the middle steam vent 154m in this embodiment. As shown in Figure 10C, this causes a steam jet 214 to fire from the middle steam vent 154m to drive the middle portion of the steam blanket 208 up through the hay bale 102. This continues until the controller 176 detects at the pressure drop test step 224 that the pressure in the boiler has dropped below 0.5 bar. When the pressure drops below 0.5 bar, at 226 the controller 176 shuts off the steam supply once more so that the pressure in the boiler 172 may rise again.

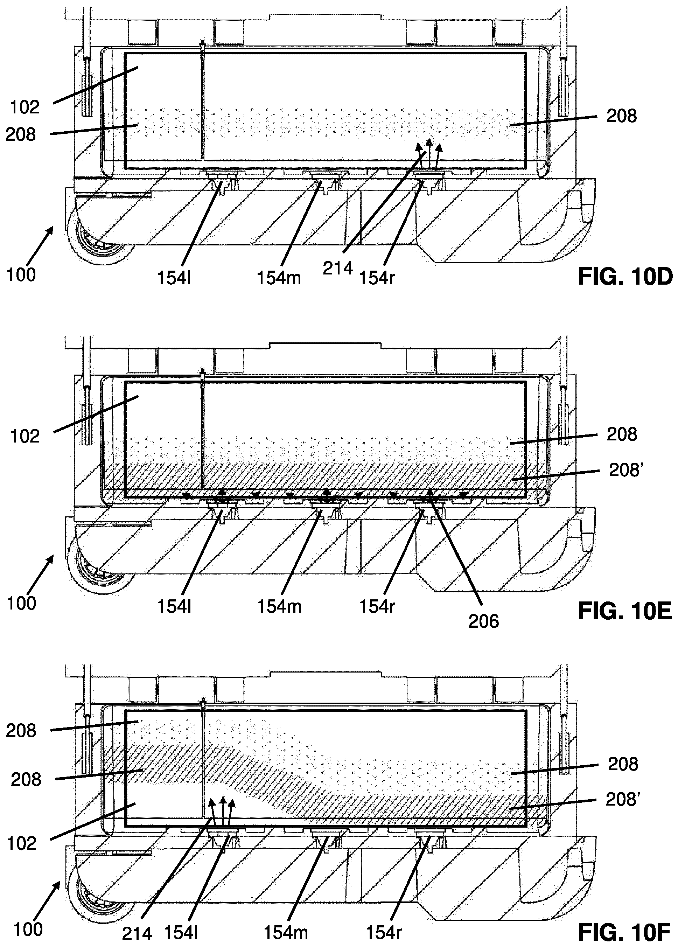

The controller 176 then performs further pressure rise tests 218 while waiting until the pressure rises above the upper pressure threshold of 0.65 bar. The controller 176 then directs steam to the third steam vent 154 only, which is the right steam vent 154r in this embodiment. As shown in Figure 10D, this causes a steam jet 214 to fire from the right steam vent 154r and to drive the right-side portion of the steam blanket 208 up through the hay bale 102. This continues until at 224 the controller 176 detects that the pressure in the boiler 172 has dropped below 0.5 bar. When the pressure drops below 0.5 bar, at 226 the controller 176 shuts off the steam supply once more so that the pressure in the boiler 172 may rise again.

At 228, Figure 9A shows that after the right steam vent 154r has fired, the controller 176 returns to another cycle of firing the first, second and third steam vents 154 in turn, and so on until the controller 176 moves to the next low-pressure phase 204 as determined by the temperature in the chamber 128 rising above the next threshold. Figures 10E and 10F show the next low-pressure phase 204 and start of the following high-pressure phase 212. The figures show a second steam blanket 208' formed beneath the first steam blanket 208, and the two steam blankets 208, 209' being driven through the hay bale 102.

Inspection of Figure 9B will show that high-pressure phase 212b is the same as high-pressure phase 212a shown in Figure 9A, except that the controller 176 compares the pressure in the boiler 172 to a higher upper pressure threshold of 0.75 bar. This higher pressure results in more powerful steam jets 214 that drive the steam blanket 208 further through the hay bale 102.

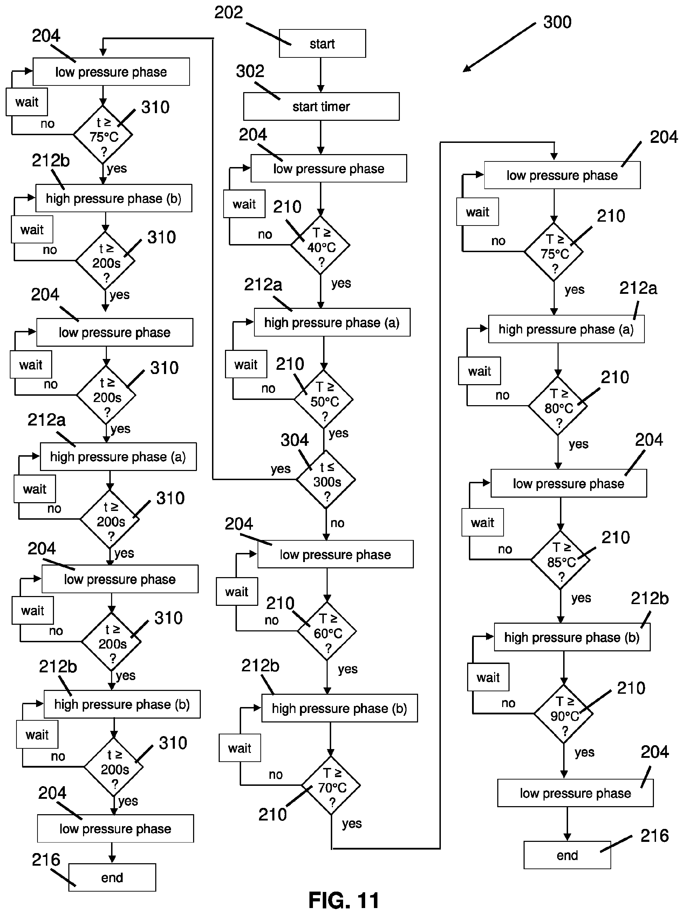

Figure 11 shows a development of the method 200 of Figure 8 that sees the controller 176 adopt a different mode of operation when a small load is placed in the hay steamer 100, for example a half-bale rather than a full-sized bale 102. When a small load is steamed, the temperature in the chamber 128 rises more quickly than for a full load, and the controller 176 can detect this and switch to a second mode of operation.

The method 300 of Figure 11 starts at 202 in the same way as for the method 200 of Figure 8, except that the controller 176 starts a timer (shown at 302) when commencing the first low-pressure phase 204. The controller 176 then switches to the first high-pressure phase 212a when the temperature reaches 40°C, as was also done in the method 200. However, after the controller 176 has determined that the temperature has risen to 50°C, the controller 176 stops the timer and checks at 304 to see if the time elapsed in less than a threshold time. This threshold time is set to 300 seconds in this embodiment. If the time elapsed in more than 300 seconds, the controller 176 assumes a full load is present and continues with the temperature-based steaming process as already described with reference to Figure 8. Alternatively, if the time elapsed in less than 300 seconds, the controller 176 assumes a part-load is present and starts a time-based steaming process shown in the left-hand column of Figure 11.

Figure 11 shows that the time-based steaming process used for partial loads is similar to the temperature-based steaming process used for full loads in that the controller 176 switches between low-pressure phases 204 and high-pressure phases 212a, 212b. Also, the controller 176 alternates between high-pressure phases 212a and high-pressure phases 212b as is also done for full loads. However, the controller 176 switches modes every 200 seconds. That is, at the start of each phase, the controller 176 starts the timer and continues with that phase until the timer reaches 200 seconds as detected at time check steps 310, at which time the controller 176 moves on to the next phase. The controller 176 switches in this way 6 times, and finishes on a low-pressure phase 204. A time-based control is used rather than a temperature-based control due to the potential for one steam vent 154 not to be covered by a hay bale 102. The uncovered steam vent 154 will discharge directly into the chamber 128, such that the temperature measured by the thermocouple 184 rises more quickly relative to the temperature in the hay bale 102, when compared to a full bale 102 where all steam vents 154 discharge into the hay bale 102 and the temperature in the chamber matches well the temperature in the hay bale 102.

The time-based steaming used for half-loads sees the steaming complete sooner than the temperature-based steaming used for full loads and at a chamber 128 temperature of closer to 100°C. For example, the time-based steaming used for half-loads may complete in 20 minutes, whereas the temperature-based steaming used for full loads may complete in 35 minutes.

The controller 176 may also automatically stop the steaming process if the temperature in the chamber 128 indicated by the thermocouple 184 rises above a maximum allowed temperature. The controller 176 may monitor this condition throughout either method 200 or 300 described above, either continuously or periodically. When the maximum allowed temperature is reached, the controller 176 may switch off the boiler and/or close valves to prevent steam escaping from the steam vents 154 into the chamber 128. As described above, the controller 176 may open a valve to the external outlet 181 to relive the pressure in the boiler 172.

The controller 176 may also monitor the boiler 172 to determine when a heater element of the boiler 174 should be descaled. For example, a temperature sensor may measure the temperature of the heating element. The controller 176 may then determine if the temperature indicated by the temperature sensor has risen to or above a maximum temperature limit to indicate that a descaling operation should be performed. The controller 176 may indicate that a descaling operation should be performed each time the measured temperature equals or exceeds the maximum temperature threshold. Alternatively, the controller 176 may indicate that a descaling operation should be performed if the measured temperature indicated by the temperature signal equals or exceeds the maximum temperature threshold more than a predetermined number of times within a certain time period. A descaling operation may effect descaling by heating the heating element to a raised temperature (raised relative to normal operation during steaming) and/or heating the element for a prolonged time (prolonged relative to normal operation during steaming).

A further mode of operation is shown in Figure 11 in which the hay steamer 100 is used to supply heated water to a showerhead. The heated water may be used to clean an animal such as a horse.

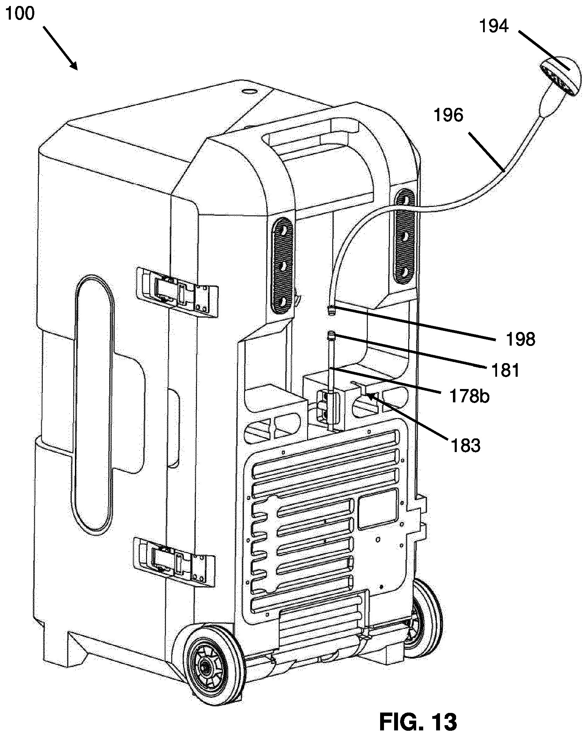

As shown in Figure 13, a showerhead 194 fitted to a hose 196 is supplied with the hay steamer 100 (although may be omitted). For the sake of clarity, only a short length of hose 196 is shown in Figure 13 and in practice a longer hose 196 would be provided with the hay steamer 100. The showerhead 194 and hose 196 may be of any standard type commonly available. The end of the hose 196 distant from the showerhead 194 may be provided with a connector 198, such as one of the push fit connectors commonly available for hoses. The external outlet 181 may also comprise a push fit connection such that the showerhead 194 and hose 196 may be connected to the hose 178b. To facilitate this, the external outlet 181 may be secured to the underside 164 of the hay steamer 100 in a notch 183 as a friction fit (see Figure 7). When the showerhead 194 is required for use, the external outlet 181 may be pulled free from the notch 183 and the hose 196 of the showerhead 194 connected to the external outlet 181. The controller 176 may direct hot water from the boiler 172 to hose 178b and hence to the showerhead 194 by opening the appropriate valve of the valve set 193.

The method 400 starts at 402 when a user selects the shower mode of operation using the user interface 110. At 404, the controller 176 then checks the pressure in the boiler 172 to test whether the pressure equals or exceeds a target pressure. In this embodiment, the target pressure is 2 bar, although other values may be used. Initially, this is unlikely to be the case. If the pressure is less than 2 bar, the controller 176 opens an inlet valve to the boiler 172 at 406 (if not already open), and loops back to 404 to check the pressure once more. Opening the inlet valve allows more water to enter the boiler 172, and a greater pressure to be reached.

When the controller 176 determines the pressure to be at or above 2 bar at step 404, the method 400 proceeds by the controller 176 closing the inlet valve at 408 (if not already closed). Then, at 410, the controller 176 checks the temperature of water in the boiler 172 to test whether the temperature equals or exceeds a target temperature. In this embodiment, the target temperature is 35°C, although other values may be used. Initially, this is unlikely to be the case. If the temperature is less than 35°C, the controller 176 turns on the heater element of the boiler 172 at 412 (if not already on) to raise the temperature of water in the boiler 172, and loops back to 404 to check the temperature once more.

When the controller 176 determines the water temperature to be at or above 35°C at step 410, the method 400 proceeds by the controller 176 turning off the heater element of the boiler 172 at 414 (if not already off). Then, at 416, the controller 176 opens the valve of the valve set 193 (if not already open) that connects the boiler 172 to the hose 178b and the external outlet 181 such that hot water can flow to the external outlet 181 and to the connected hose 196 and showerhead 194.

The controller 176 monitors the pressure and temperature while the method 400 is ongoing by virtue of the return loop linking step 418 to 404 in Figure 11. At step 418, the controller 176 determines whether the user has ended the shower mode of operation via the user interface 110 (and, if so, ends the method 400 at 420). Assuming the method 400 is ongoing because it has not yet been ended by the user, the method returns to 404 where the controller 176 tests the pressure in the boiler 172 once more and adjusts the inlet valve as necessary at steps 406 and/or 408. The controller 176 also tests the water temperature once more and adjusts the heater element of the boiler 172 as necessary at steps 412 and/or 414. No action is required at 416 as the outlet valve is already open in the subsequent iterations of the loop through steps 404 to 418. Each step 418 sees the controller 176 loop back through further pressure and temperature checks all the while the user has not ended the shower mode.

A person skilled in the art will appreciate that the above embodiments may be varied in many different respects without departing from the scope of the present invention that is defined by the appended claims.

In the above embodiment, a hay steamer 100 is described. However, the hay steamer 100 is not limited to steaming only hay. For example, the hay steamer 100 may be used for steaming any type of animal fodder such as straw, silage and haylage. The hay steamer 100 may also be used for growing plants, fruits and vegetables. For example, the hay steamer 100 may be used to pasteurise straw or other substrate when growing mushrooms. The hay steamer 100 may be used to steam silage in bales or in loose form.

The hay steamer 100 resembles a wheeled-trunk, and has a size suitable for containing a standard-sized hay bale 102. The hay steamer 100 can also be sized to hold half-sized and other sized bales, or loose hay.

While the lower part 116 and the upper part 118 are described above as being joined by hinges 120, other arrangements are possible. For example, the lower part 116 and the upper part 118 need not be joined at all, such that the upper part 118 may be lifted from the lower part 116 when the hay steamer 100 is to be loaded and unloaded. In the above embodiment, the seal 136 is provided on the upper part 118, but the seal 136 may be provided on the lower part 116 instead. In alternative arrangements, the seal 136 is formed as a ridge of material so as to be integral to either the lower part 116 or the upper part 118. Also, rollers may be used in the place of wheels 104, or the wheels 104 may be omitted altogether. The capacity of the water tank 170 may also be varied.

The boiler 172 is described as having three outlets to connect to the three steam vents 154. However, a single outlet to the boiler 172 may be provided that feeds one or more manifolds that split the common steam flow from the boiler 172 into separate steam paths for the three steam vents 154. The valves of the valve set 193 would be placed downstream of the manifolds to control steam delivery to each of the steam vents 154.

The temperature, pressure and time bands described above are examples, and may be varied, as may the number of phases performed in a steaming process. The number of steam vents 154 may be varied, as too may the firing sequence of high-pressure steam jets 214 from the steam vents 154.

Figures 10A to 10F are schematic and approximate, and are intended to illustrate broadly how the low pressure steam forms a steam blanket 208 and how the high pressure steam jets 214 drive the steam blanket 108 through the hay bale 102. The size and shape of the steam blanket 102 is figurative and not accurate. The size and shape of the steam blanket 102 may vary from that shown, as too may the passage of the steam blanket 102 through the hay bale 102. For example, Figures 10A to 10F show the initial steam blanket 208 being driven to the top of the hay bale 102 after two high press phases 212. Generally, this is a simplification and more than two high pressure phases 212 will be required to drive the first steam blanket 208 to the top of the hay bale 102. Towards the end of the steaming process, several steam blankets 108 may co-exist within the hay bale 102, with mingling between adjacent steam blankets 108.

## Claims

1. An apparatus for steaming animal fodder, optionally a hay steamer, comprising:
a body defining a chamber in which animal fodder may be placed, the body comprising an upper part and a lower part configured to be placed together to form the chamber, the lower part including a floor on which the animal fodder is supported;
an aperture provided in the floor of the lower part;
a conduit configured to carry steam to the aperture thereby allowing steam to pass into the chamber; **characterised in that** it further comprises
a controller arranged to control passage of steam to and through the aperture in at least one combined cycle comprising:
a low-pressure phase in which the controller allows steam to pass to and through the aperture into the chamber at a relatively low pressure;
a high-pressure phase in which the controller allows steam to pass to and through the aperture into the chamber at a relatively high pressure; and
such that each combined cycle of the least one combined cycle includes the low-pressure phase followed by the high-pressure phase.

2. The apparatus of claim 1, further comprising a valve arranged to open and close thereby allowing and preventing steam to pass from the aperture, and wherein the controller is arranged to open the valve to allow steam to pass to and through the aperture in the low-pressure phase and in the high-pressure phase of each combined cycle of the least one combined cycle.

3. The apparatus of claim 2, wherein:
the conduit is a first conduit, the aperture is a first aperture and the valve is a first valve associated with the first aperture;
the apparatus further comprises a second aperture provided in the floor of the lower part, a second conduit configured to carry steam to second aperture thereby allowing steam to pass into the chamber, and a second valve associated with the second aperture arranged to open and close thereby allowing and preventing steam to pass to and through the second aperture; and
in each combined cycle of the least one combined cycle, the controller is arranged to open the first valve and the second valve to allow steam to pass to and through the first aperture and the second aperture in the low-pressure phase and in the high-pressure phase.

4. The apparatus of claim 3 wherein, in each combined cycle of the least one combined cycle, the controller is arranged:
to open the first valve and the second valve simultaneously to allow steam to pass to and through the first aperture and the second aperture in the low-pressure phase; and
to open the first valve and the second valve sequentially to allow steam to pass to and through the first aperture and the second aperture sequentially in the high-pressure phase.

5. The apparatus of claim 4, wherein the controller is arranged:
to receive a steam pressure signal that provides a measure of steam pressure;
in the high pressure phase of each combined cycle of the least one combined cycle, to control at least one high pressure cycle comprising:
opening the first valve to allow steam to pass to and through the first aperture when the steam pressure signal indicates that the steam pressure is above an upper pressure threshold and to close the first valve when the steam pressure signal indicates that the steam pressure has dropped below a lower pressure threshold;
opening the second valve to allow steam to pass to and through the second aperture when the steam pressure signal indicates that the steam pressure is above the upper pressure threshold and to close the second valve when the steam pressure signal indicates that the steam pressure has dropped below a lower pressure threshold,
and optionally, the apparatus further comprises:
a boiler arranged to boil water and generate the steam and wherein the first conduit and second conduit connect the boiler to the first and second aperture respectively; and
a pressure sensor positioned in the boiler arranged to measure the steam pressure in the boiler and to provide the pressure signal to the controller that provides the measure of the steam pressure.

6. The apparatus of claim 5, wherein the controller is arranged:
to receive a temperature signal that provides a measure of the temperature in the chamber;
to control passage of the steam to and through the first and second apertures in the at least one combined cycle according to the temperature indicated by the temperature signal such that in a first combined cycle of the at least one combined cycle:
the controller controls passage of the steam to and through the first and second apertures according to the low-pressure phase while the temperature indicated by the temperature signal is below a first temperature threshold; and
the controller controls passage of the steam to and through the first and second apertures according to the high-pressure phase when the temperature indicated by the temperature signal rises above the first temperature threshold.

7. The apparatus of claim 6, further comprising a temperature sensor positioned in the upper half of the chamber, optionally at the top of the chamber, and wherein the temperature sensor is arranged to measure the temperature in the chamber and to provide the temperature signal to the controller that provides the measure of the temperature in the chamber.

8. The apparatus of claim 6 or 7, wherein the controller is arranged:
to control passage of the steam to and through the first and second aperture in further combined cycles of the at least one combined cycle according to the temperature indicated by the temperature signal such that in each combined cycle of the further combined cycles:
the controller controls passage of the steam to and through the first and second apertures according to the low-pressure phase while the temperature indicated by the temperature signal rises above a lower temperature threshold; and
the controller controls passage of the steam to and through the first and second apertures according to the high-pressure phase when the temperature
indicated by the temperature signal rises above a higher temperature threshold, and optionally, wherein the controller is further arranged:
to control passage of the steam to and through the first and second apertures in a final low-pressure phase in which the controller allows steam to pass from the first and second apertures into the chamber at the relatively low pressure when the temperature indicated by the temperature signal rises above a final temperature threshold.

9. The apparatus of claim 8 wherein the controller is arranged in each high-pressure phase of each combined cycle:
to control passage of the steam to and through the first and second apertures in successive high pressure cycles while the temperature signal indicates that the controller should operate in that high-pressure phase and optionally,
wherein the controller is further arranged to control passage of the steam to and through the first and second apertures in the high pressure phases of successive combined cycles of the least one combined cycle such that the value of the upper pressure threshold alternates between a first upper pressure threshold and a second, different upper pressure threshold.

10. A method of steaming animal fodder in an apparatus comprising a body defining a chamber with a floor on which the animal fodder rests, the method comprising:
introducing steam into the chamber at a relatively low pressure in a low-pressure phase;
followed by introducing steam into the chamber at a relatively high pressure in a high-pressure phase.

11. The method of claim 10, comprising introducing steam into the chamber beneath the animal fodder during the low-pressure phase and the high-pressure phase, and comprising introducing the steam through a series of apertures provided in the floor of the apparatus.

12. The method of claim 11, comprising introducing the steam through all the apertures during the low-pressure phase, and introducing the steam through one aperture at a time in the high-pressure phase, and optionally, during the high-pressure phase:
measuring a pressure of the steam;
when the pressure exceeds a higher pressure threshold, releasing the steam to one of the apertures to produce a burst of steam from that aperture;
when the pressure falls below a lower pressure threshold, preventing the steam from passing through any of the apertures, thereby allowing the pressure of the steam to increase; and
one or more cycles of:
when the pressure exceeds the higher pressure threshold once more, releasing the steam to a different aperture from the last aperture to supply steam to the chamber;
when the pressure falls below the lower pressure threshold, preventing the steam from passing through any of the apertures, thereby allowing the pressure of the steam to increase.

13. The method of any of claims 10 to 12, comprising further cycles of introducing steam into the chamber at a relatively low pressure, followed by introducing steam into the chamber at a relatively high pressure, and comprising measuring the rising temperature in the chamber, and wherein:
the cycles of introducing steam into the chamber at a relatively low pressure, followed by introducing steam into the chamber at a relatively high pressure are performed in response to the measured temperature according to a series of increasingly hot temperature bands, such that;
a low-pressure phase is performed during an initial temperature band;
a high-pressure phase is performed during the next temperature band reached.

14. The method of claim 13, further comprising one or more further cycles of:
performing a low-pressure phase during the next temperature band reached; and
performing a high-pressure phase during the next temperature band reached.

15. The method of claim 14, wherein alternating values for the higher pressure threshold are used in successive high-pressure phases, and optionally, comprising a final low-pressure phase when a measured temperature rises above a final temperature threshold.

## Patentansprüche

1. Vorrichtung zum Bedampfen von Tierfutter, optional Heubedampfer, umfassend:
einen Körper, der eine Kammer definiert, in der Tierfutter platziert werden kann, wobei der Körper einen oberen Teil und einen unteren Teil umfasst, die ausgestaltet sind, zusammen platziert zu werden, um die Kammer zu bilden, wobei der untere Teil einen Boden umfasst, auf dem das Tierfutter abgestützt ist;
eine Öffnung, die in dem Boden des unteren Teils bereitgestellt ist;
eine Leitung, die ausgestaltet ist, Dampf zur Öffnung zu tragen, wodurch ermöglicht wird, dass Dampf in die Kammer passiert; **dadurch gekennzeichnet, dass** sie ferner umfasst
eine Steuerung, die angeordnet ist, ein Passieren von Dampf zu der und durch die Öffnung in mindestens einem kombinierten Zyklus zu steuern, umfassend:
eine Niedrigdruckphase, in der die Steuerung ermöglicht, dass Dampf zu der und durch die Öffnung in die Kammer bei relativ niedrigem Druck passiert;
eine Hochdruckphase, in der die Steuerung ermöglicht, dass Dampf zu der und durch die Öffnung in die Kammer bei relativ hohem Druck passiert; und
so dass jeder kombinierte Zyklus des mindestens einen kombinierten Zyklus die Niedrigdruckphase gefolgt von der Hochdruckphase umfasst.

2. Vorrichtung nach Anspruch 1, ferner umfassend ein Ventil, das angeordnet ist, sich zu öffnen und schließen, wodurch ermöglicht und verhindert wird, dass Dampf aus der Öffnung passiert, und wobei die Steuerung angeordnet ist, das Ventil zu öffnen, um zu ermöglichen, dass Dampf zu der und durch die Öffnung in der Niedrigdruckphase und in der Hochdruckphase eines jeden kombinierten Zyklus des mindestens einen kombinierten Zyklus passiert.

3. Vorrichtung nach Anspruch 2, wobei:
die Leitung eine erste Leitung ist, die Öffnung eine erste Öffnung ist und das Ventil ein erstes Ventil ist, das der ersten Öffnung zugehörig ist;
die Vorrichtung ferner eine zweite Öffnung, die in dem Boden des unteren Teils bereitgestellt ist, eine zweite Leitung, die ausgestaltet ist, Dampf zur zweiten Öffnung zu tragen, wodurch ermöglicht wird, dass Dampf in die Kammer passiert, und ein zweites Ventil umfasst, das der zweiten Öffnung zugehörig ist und das angeordnet ist, sich zu öffnen und zu schließen, wodurch ermöglicht und verhindert wird, dass Dampf zu der und durch die zweite Öffnung passiert; und
in jedem kombinierten Zyklus des mindestens einen kombinierten Zyklus, die Steuerung angeordnet ist, das erste Ventil und das zweite Ventil zu öffnen, um zu ermöglichen, dass Dampf zu der und durch die erste Öffnung und die zweite Öffnung in der Niedrigdruckphase und in der Hochdruckphase passiert.

4. Vorrichtung nach Anspruch 3, wobei, in jedem kombinierten Zyklus des mindestens einen kombinierten Zyklus, die Steuerung angeordnet ist:
das erste Ventil und das zweite Ventil gleichzeitig zu öffnen, um zu ermöglichen, dass Dampf zu der und durch die erste Öffnung und die zweite Öffnung in der Niedrigdruckphase passiert; und
das erste Ventil und das zweite Ventil nacheinander zu öffnen, um zu ermöglichen, dass Dampf zu der und durch die erste Öffnung und die zweite Öffnung nacheinander in der Hochdruckphase passiert.

5. Vorrichtung nach Anspruch 4, wobei die Steuerung angeordnet ist:
ein Dampfdrucksignal zu empfangen, das ein Maß eines Dampfdrucks bereitstellt;
in der Hochdruckphase eines jeden kombinierten Zyklus des mindestens einen kombinierten Zyklus mindestens einen Hochdruckzyklus zu steuern, umfassend:
Öffnen des ersten Ventils, um zu ermöglichen, dass Dampf zu der und durch die erste Öffnung passiert, wenn das Dampfdrucksignal anzeigt, dass der Dampfdruck über einer oberen Druckschwelle ist, und Schließen des ersten Ventils, wenn das Dampfdrucksignal anzeigt, dass der Dampfdruck unter eine untere Druckschwelle gefallen ist;
Öffnen des zweiten Ventils, um zu ermöglichen, dass Dampf zu der und durch die zweite Öffnung passiert, wenn das Dampfdrucksignal anzeigt, dass der Dampfdruck über der oberen Druckschwelle ist, und Schließen des zweiten Ventils, wenn das Dampfdrucksignal anzeigt, dass der Dampfdruck unter eine untere Druckschwelle gefallen ist;
und optional wobei die Vorrichtung ferner umfasst:
einen Kocher, der angeordnet ist, Wasser zu kochen und den Dampf zu erzeugen, und wobei die erste Leitung und die zweite Leitung den Kocher mit jeweils der ersten und der zweiten Öffnung verbinden; und
einen Drucksensor, der in dem Kocher positioniert ist und angeordnet ist, den Dampfdruck in dem Kocher zu messen und das Drucksignal an die Steuerung bereitzustellen, die das Maß des Dampfdrucks bereitstellt.

6. Vorrichtung nach Anspruch 5, wobei die Steuerung angeordnet ist:
ein Temperatursignal zu empfangen, das ein Maß der Temperatur in der Kammer bereitstellt;
ein Passieren des Dampfs zu der und durch die erste und zweite Öffnung in dem mindestens einen kombinierten Zyklus gemäß der Temperatur zu steuern, die von dem Temperatursignal angezeigt wird, so dass in einem ersten kombinierten Zyklus des mindestens einen kombinierten Zyklus:
die Steuerung ein Passieren des Dampfs zu der und durch die erste und zweite Öffnung gemäß der Niedrigdruckphase steuert, während die Temperatur, die von dem Temperatursignal angezeigt wird, unter einer ersten Temperaturschwelle ist; und
die Steuerung ein Passieren des Dampfs zu der und durch die erste und zweite Öffnung gemäß der Hochdruckphase steuert, wenn die Temperatur, die von dem Temperatursignal angezeigt wird, über die erste Temperaturschwelle ansteigt.

7. Vorrichtung nach Anspruch 6, ferner umfassend einen Temperatursensor, der in der oberen Hälfte der Kammer, optional an der Oberseite der Kammer, positioniert ist, und wobei der Temperatursensor angeordnet ist, die Temperatur in der Kammer zu messen und das Temperatursignal für die Steuerung bereitzustellen, die das Maß der Temperatur in der Kammer bereitstellt.

8. Vorrichtung nach Anspruch 6 oder 7, wobei die Steuerung angeordnet ist:
ein Passieren des Dampfs zu der und durch die erste und zweite Öffnung in weiteren kombinierten Zyklen des mindestens einen kombinierten Zyklus gemäß der Temperatur zu steuern, die von dem Temperatursignal angezeigt wird, so dass in jedem kombinierten Zyklus der weiteren kombinierten Zyklen:
die Steuerung ein Passieren des Dampfs zu der und durch die erste und zweite Öffnung gemäß der Niedrigdruckphase steuert, während die Temperatur, die von dem Temperatursignal angezeigt wird, über eine untere Temperaturschwelle steigt; und
die Steuerung ein Passieren des Dampfs zu der und durch die erste und zweite Öffnung gemäß der Hochdruckphase steuert, wenn die Temperatur, die von dem Temperatursignal angezeigt wird, über eine höhere Temperaturschwelle steigt, und
optional, wobei die Steuerung ferner angeordnet ist:
ein Passieren des Dampfs zu der und durch die erste und zweite Öffnung in einer finalen Niedrigdruckphase zu steuern, in der die Steuerung ermöglicht, dass Dampf aus der ersten und zweiten Öffnung in die Kammer bei dem relativ niedrigen Druck passiert, wenn die Temperatur, die von dem Temperatursignal angezeigt wird, über eine finale Temperaturschwelle steigt.

9. Vorrichtung nach Anspruch 8, wobei die Steuerung in jeder Hochdruckphase eines jeden kombinierten Zyklus angeordnet ist:
ein Passieren des Dampfs zu der und durch die erste und zweite Öffnung in aufeinanderfolgenden Hochdruckzyklen zu steuern, während das Temperatursignal anzeigt, dass die Steuerung in dieser Hochdruckphase betrieben werden sollte, und optional
wobei die Steuerung ferner angeordnet ist, ein Passieren des Dampfs zu der und durch die erste und zweite Öffnung in den Hochdruckphasen von aufeinanderfolgenden kombinierten Zyklen des mindestens einen kombinierten Zyklus zu steuern, so dass das Ventil der oberen Druckschwelle zwischen einer ersten oberen Druckschwelle und einer zweiten, anderen oberen Druckschwelle alterniert.

10. Verfahren zum Bedampfen von Tierfutter in einer Vorrichtung, die einen Körper umfasst, der eine Kammer mit einem Boden definiert, auf dem das Tierfutter liegt, das Verfahren umfassend:
Einleiten von Dampf in die Kammer bei einem relativ niedrigen Druck in einer Niedrigdruckphase;
gefolgt von einem Einleiten von Dampf in die Kammer bei einem relativ hohen Druck in einer Hochdruckphase.

11. Verfahren nach Anspruch 10, umfassend ein Einleiten von Dampf in die Kammer unter dem Tierfutter während der Niedrigdruckphase und der Hochdruckphase, und umfassend ein Einleiten des Dampfes durch eine Reihe von Öffnungen, die in dem Boden der Vorrichtung bereitgestellt sind.

12. Verfahren nach Anspruch 11, umfassend ein Einleiten des Dampfes durch alle Öffnungen während der Niedrigdruckphase, und ein Einleiten des Dampfes durch eine Öffnung nach der anderen in der Hochdruckphase, und optional, während der Hochdruckphase:
Messen eines Drucks des Dampfes;
wenn der Druck eine höhere Druckschwelle überschreitet, Freigeben des Dampfes zu einer der Öffnungen, um einen Dampfstoß aus der Öffnung zu erzeugen;
wenn der Druck unter eine untere Druckschwelle fällt, Verhindern, dass der Dampf durch eine der Öffnungen passiert, wodurch ermöglicht wird, dass der Druck des Dampfes ansteigt; und
einen oder mehrere Zyklen von:
wenn der Druck die höhere Druckschwelle ein weiteres Mal überschreitet, Freigeben des Dampfes an eine andere Öffnung aus der letzten Öffnung, um der Kammer Dampf zuzuführen;
wenn der Druck unter die untere Druckschwelle fällt, Verhindern, dass der Dampf durch eine der Öffnungen passiert, wodurch ermöglicht wird, dass der Druck des Dampfes ansteigt.

13. Verfahren nach einem der Ansprüche 10 bis 12, umfassend weitere Zyklen des Einleitens von Dampf in die Kammer bei einem relativ niedrigen Druck, gefolgt von einem Einleiten von Dampf in die Kammer bei einem relativ hohen Druck, und umfassend ein Messen der ansteigenden Temperatur in der Kammer, und wobei:
die Zyklen des Einleitens von Dampf in die Kammer bei einem relativ niedrigen Druck, gefolgt von einem Einleiten von Dampf in die Kammer bei einem relativ hohen Druck ansprechend auf die gemessene Temperatur gemäß einer Reihe von zunehmend warmen Temperaturbereichen durchgeführt werden, so dass;
eine Niedrigdruckphase während eines anfänglichen Temperaturbereichs durchgeführt wird;
eine Hochdruckphase während des nächsten erreichten Temperaturbereichs durchgeführt wird.

14. Verfahren nach Anspruch 13, ferner umfassend einen oder mehrere Zyklen von:
Durchführen einer Niedrigdruckphase während des nächsten erreichten Temperaturbereichs; und
Durchführen einer Hochdruckphase während des nächsten erreichten Temperaturbereichs.

15. Verfahren nach Anspruch 14, wobei alternierende Werte für die höhere Druckschwelle in aufeinanderfolgenden Hochdruckphasen verwendet werden, und optional, umfassend eine finale Niedrigdruckphase, wenn eine gemessene Temperatur über eine finale Temperaturschwelle ansteigt.

## Revendications

1. Appareil destiné à traiter à la vapeur du fourrage pour animaux, éventuellement étuve à foin, comprenant :
un corps définissant une chambre dans laquelle le fourrage pour animaux peut être placé, le corps comprenant une partie supérieure et une partie inférieure configurées pour être placées ensemble afin de former la chambre, la partie inférieure comportant un fond sur lequel le fourrage pour animaux est supporté ;
une ouverture prévue sur le fond de la partie inférieure ;
un conduit configuré pour transporter la vapeur vers l'ouverture de façon à permettre ainsi à la vapeur de passer dans la chambre ; **caractérisé en ce qu'**il comprend en outre
un dispositif de commande prévu afin de contrôler le passage de la vapeur vers et à travers l'ouverture pendant au moins un cycle combiné comprenant :
une phase de basse pression pendant laquelle le dispositif de commande permet à la vapeur de passer vers et à travers l'ouverture dans la chambre à une pression relativement basse ;
une phase de haute pression pendant laquelle le dispositif de commande permet à la vapeur de passer vers et à travers l'ouverture dans la chambre à une pression relativement haute ; et
de sorte que chaque cycle combiné de l'au moins un cycle combiné comporte la phase de basse pression suivie de la phase de haute pression.

2. Appareil selon la revendication 1, comprenant en outre une vanne prévue pour s'ouvrir et se fermer afin de permettre à la vapeur et de l'empêcher de passer depuis l'ouverture, et dans lequel le dispositif de commande est prévu pour ouvrir la vanne afin de permettre à la vapeur de passer vers et à travers l'ouverture pendant la phase de basse pression et pendant la phase de haute pression de chaque cycle combiné de l'au moins un cycle combiné.

3. Appareil selon la revendication 2, dans lequel :
le conduit est un premier conduit, l'ouverture est une première ouverture et la vanne est une première vanne associée à la première ouverture ;
l'appareil comprend en outre une deuxième ouverture prévue sur le fond de la partie inférieure, un deuxième conduit configuré pour transporter la vapeur vers la deuxième ouverture afin de permettre ainsi à la vapeur de passer dans la chambre, et une deuxième vanne associée à la deuxième ouverture prévue pour s'ouvrir et se fermer afin de permettre à la vapeur et de l'empêcher de passer vers et à travers la deuxième ouverture ; et
pendant chaque cycle combiné de l'au moins un cycle combiné, le dispositif de commande est prévu pour ouvrir la première vanne et la deuxième vanne afin de permettre à la vapeur de passer vers et à travers la première ouverture et la deuxième ouverture pendant la phase de basse pression et pendant la phase de haute pression.

4. Appareil selon la revendication 3 dans lequel, pendant chaque cycle combiné de l'au moins un cycle combiné, le dispositif de commande est prévu :
pour ouvrir simultanément la première vanne et la deuxième vanne afin de permettre à la vapeur de passer vers et à travers la première ouverture et la deuxième ouverture pendant la phase de basse pression ; et
pour ouvrir la première vanne et la deuxième vanne de façon séquentielle afin de permettre à la vapeur de passer vers et à travers la première ouverture et la deuxième ouverture de façon séquentielle pendant la phase de haute pression.

5. Appareil selon la revendication 4, dans lequel le dispositif de commande est prévu :
pour recevoir un signal de pression de vapeur qui fournit une mesure de la pression de la vapeur ;
pendant la phase de haute pression de chaque cycle combiné de l'au moins un cycle combiné, pour contrôler au moins un cycle de haute pression comprenant :
l'ouverture de la première vanne afin de permettre à la vapeur de passer vers et à travers la première ouverture lorsque le signal de pression de la vapeur indique que la pression de la vapeur est supérieure à un seuil de pression supérieur et afin de fermer la première vanne lorsque le signal de pression de la vapeur indique que la pression de la vapeur a chuté en-dessous d'un seuil de pression inférieur ;
l'ouverture de la deuxième vanne afin de permettre à la vapeur de passer vers et à travers la deuxième ouverture lorsque le signal de pression de la vapeur indique que la pression de la vapeur est supérieure au seuil de pression supérieur et afin de fermer la deuxième vanne lorsque le signal de pression de la vapeur indique que la pression de la vapeur a chuté en-dessous d'un seuil de pression inférieur,
et, éventuellement, l'appareil comprend en outre :
une chaudière prévue pour faire bouillir l'eau et générer de la vapeur et dans lequel le premier conduit et le deuxième conduit relient respectivement la chaudière à la première et à la deuxième ouvertures ; et
un capteur de pression positionné dans la chaudière et prévu pour mesurer la pression de la vapeur dans la chaudière et afin de fournir le signal de pression au dispositif de commande qui fournit la mesure de la pression de la vapeur.

6. Appareil selon la revendication 5, dans lequel le dispositif de commande est prévu :
pour recevoir un signal de température qui fournit une mesure de la température dans la chambre ;
pour contrôler le passage de la vapeur vers et à travers la première et la deuxième ouvertures pendant l'au moins un cycle combiné selon la température indiquée par le signal de température de sorte que, pendant un premier cycle combiné de l'au moins un cycle combiné :
le dispositif de commande contrôle le passage de la vapeur vers et à travers la première et la deuxième ouvertures selon la phase de basse pression pendant que la température indiquée par le signal de température est inférieure à un premier seuil de température ; et
le dispositif de commande contrôle le passage de la vapeur vers et à travers la première et la deuxième ouvertures selon la phase de haute pression lorsque la température indiquée par le signal de température augmente au-dessus du premier seuil de température.

7. Appareil selon la revendication 6, comprenant en outre un capteur de température positionné dans la moitié supérieure de la chambre, éventuellement au sommet de la chambre, et dans lequel le capteur de température est prévu pour mesurer la température dans la chambre et pour fournir le signal de température au dispositif de commande qui fournit la mesure de la température dans la chambre.

8. Appareil selon la revendication 6 ou la revendication 7, dans lequel le dispositif de commande est prévu :
pour contrôler le passage de la vapeur vers et à travers la première et la deuxième ouvertures pendant des cycles combinés supplémentaires de l'au moins un cycle combiné selon la température indiquée par le signal de température de sorte que, pendant chaque cycle combiné des cycles combinés supplémentaires :
le dispositif de commande contrôle le passage de la vapeur vers et à travers la première et la deuxième ouvertures selon la phase de basse pression pendant que la température indiquée par le signal de température augmente au-dessus d'un seuil de température inférieur ; et
le dispositif de commande contrôle le passage de la vapeur vers et à travers la première et la deuxième ouvertures selon la phase de haute pression lorsque la température indiquée par le signal de température augmente au-dessus d'un seuil de température supérieur, et éventuellement, dans lequel le dispositif de commande est en outre prévu :
pour contrôler le passage de la vapeur vers et à travers la première et la deuxième ouvertures pendant une phase de basse pression finale pendant laquelle le dispositif de commande permet à la vapeur de passer depuis la première et la deuxième ouvertures vers la chambre à la pression relativement basse lorsque la température indiquée par le signal de température augmente au-dessus d'un seuil de température final.

9. Appareil selon la revendication 8 dans lequel le dispositif de commande est prévu pendant chaque phase de haute pression de chaque cycle combiné :
pour contrôler le passage de la vapeur vers et à travers la première et la deuxième ouvertures pendant les cycles de haute pression successifs pendant que le signal de température indique que le dispositif de commande doit fonctionner pendant cette phase de haute pression et, éventuellement,
dans lequel le dispositif de commande est prévu en outre pour contrôler le passage de la vapeur vers et à travers la première et la deuxième ouvertures pendant les phases de haute pression des cycles combinés successifs de l'au moins un cycle combiné de sorte que la valeur du seuil de pression supérieur alterne entre un premier seuil de pression supérieur et un deuxième, seuil de pression supérieur différent.

10. Procédé destiné à traiter à la vapeur du fourrage pour animaux dans un appareil comprenant un corps définissant une chambre avec un fond sur lequel le fourrage pour animaux repose, le procédé comprenant :
l'introduction de vapeur dans la chambre à une pression relativement basse pendant une phase de basse pression ;
suivie par l'introduction de vapeur dans la chambre à une pression relativement haute pendant une phase de haute pression.

11. Procédé selon la revendication 10, comprenant l'introduction de vapeur dans la chambre sous le fourrage pour animaux pendant la phase de basse pression et la phase de haute pression, et comprenant l'introduction de vapeur à travers une série d'ouvertures prévues sur le fond de l'appareil.

12. Procédé selon la revendication 11, comprenant l'introduction de vapeur à travers toutes les ouvertures pendant la phase de basse pression, et l'introduction de vapeur à travers une ouverture à un moment pendant la phase de haute pression, et, éventuellement, pendant la phase de haute pression :
la mesure d'une pression de la vapeur ;
lorsque la pression dépasse un seuil de pression supérieur, la libération de la vapeur vers l'une des ouvertures afin de produire une poussée de vapeur depuis cette ouverture ;
lorsque la pression devient inférieure à un seuil de pression inférieur, le fait d'empêcher la vapeur de passer à travers n'importe laquelle des ouvertures, afin de permettre ainsi à la pression de la vapeur d'augmenter ; et
un ou plusieurs cycles qui consistent à :
lorsque la pression dépasse à nouveau le seuil de pression supérieur, libérer la vapeur vers une ouverture différente depuis la dernière ouverture afin de fournir de la vapeur à la chambre ;
lorsque la pression chute en-dessous du seuil de pression supérieur, empêcher la vapeur de passer à travers n'importe laquelle des ouvertures, afin de permettre ainsi à la pression de la vapeur d'augmenter.

13. Procédé selon l'une quelconque des revendications 10 à 12, comprenant des cycles supplémentaires d'introduction de vapeur dans la chambre à une pression relativement basse, suivis par l'introduction de vapeur dans la chambre à une pression relativement haute, et comprenant la mesure de l'augmentation de température dans la chambre, et dans lequel :
les cycles d'introduction de vapeur dans la chambre à une pression relativement basse, suivis par l'introduction de vapeur dans la chambre à une pression relativement haute, sont réalisés en réponse à la température mesurée selon une série de bandes de températures de plus en plus chaudes, de sorte que :
une phase de basse pression soit réalisée pendant une bande de températures initiale ;
une phase de haute pression soit réalisée pendant la prochaine bande de températures atteinte.

14. Procédé selon la revendication 13, comprenant en outre un ou plusieurs cycles qui consistent à :
réaliser une phase de basse pression pendant la prochaine bande de températures atteinte ; et
réaliser une phase de haute pression pendant la prochaine bande de températures atteinte.

15. Procédé selon la revendication 14, dans lequel des valeurs alternées pour le seuil de pression supérieur sont utilisées pendant des phases de haute pression successives, et, éventuellement, comprenant une phase de basse pression finale lorsqu'une température mesurée augmente au-dessus d'un seuil de température final.
